# EUROPEAN PATENT APPLICATION

(11) **EP 2 299 407 A1**
(43) Date of publication of application: **23.03.2011**
(21) Application number: 09750329.6
(22) Date of filing: 11.05.2009
(51) Int. Cl.: G06T 7/60

(54) **LINE SEGMENT EXTRACTION DEVICE**

(30) Priority: 19.05.2008 JP 2008130724
(71) Applicant: Lateral Signal Processing Corporation, Hokkaido 003-0005 (JP)
(72) Inventor: KATO, Haruo, Sapporo-shi Hokkaido 003-0005 (JP)
(74) Representative: Ström & Gulliksson AB
(86) International application number: PCT/JP2009/002033
(87) International publication number: WO 2009/141967

(57) **Abstract**

Provided is a line segment extraction device capable of accurately and rapidly extracting a line segment. A pattern generating means (2) relates an original image to cells of a cellular automation to generate time-series configuration patterns. A primary detection means (4) detects the movement of a cell in an active state and sets a primary flag according to the configuration patterns generated in time series. This generates time-series primary flag patterns. A secondary detection means (6) detects a cell in which the direction of the primary flag and the direction of the movement thereof are matched to set a secondary flag according to the primary flag patterns generated in time series. A line segment detection means (8) records a line segment marker on a cell in which the secondary flag in the opposite direction is generated, together with the direction. In this way, the line segment is extracted.

## Description

### Field of the Invention

The present invention relates to a device for extracting line segments contained in picture data.

### Background Art

The inventor has already proposed a device for extracting line segments contained in pictures that utilizes a two dimensional cellular automaton (patent ref. 1, 2, 3). If these devices are used as a base, line segment extraction can be performed more quickly and moreover more accurately than conventional line segment extraction that uses templates or picture operators.

### Citation List

### Patent Literature

Patent Literature 1: Japanese Laid-open Patent Application 1994-124348
Patent Literature 2: Japanese Laid-open Patent Application 1994-52315
Patent Literature 3: Japanese Laid-open Patent Application 1994-52306

### Summary of the Invention

### Technical Problem

As for the inventor's proposed technology mentioned above, although compared with conventional technology they have the features of being faster and more accurate, there is noise contained in line segment detection. Further, the problem exists that depending on the characteristics of the picture to be processed, processing is not necessarily fast.

Therefore, the purpose of this invention is to solve the problems mentioned above, offering a line segment extraction device that makes processing both accurate and fast.

### Solution to Problem

Following, each feature of the invention is shown independently.

(1)(3) The device for extracting line segments from a picture having a plurality of pixels disposed in multidimensional according to the present invention, the device comprises:
pattern generating means for calculating next state to be output from cell of interest to surrounding cells based on the states input from the surrounding cells and the present state of the cell of interest, said cell of interest being selected in turn from cells corresponding to the pixels of picture each of which having active state or inactive state according to value of corresponding pixel of picture and for calculating next state of the cell of interest based on present state of the cell of interest and states input from the surrounding cells to the cell of interest so that a configuration pattern indicating states of cells in multidimensional is generated and recorded, wherein the pattern generating means repeats the process of the generating and recording the configuration pattern;
primary detecting means for detecting movement with time of active cell along with directional virtual line based on the configuration patterns at preceding and following timings (q-k, ...., q-1, t, q+1, ..., q+1) of the reference time (q) recorded by the pattern generating means so that primary flag pattern indicating positions of directional primary flags in multidimensional is generated and recorded by recording the directional primary flags which shows that the cells is part of the directional virtual line of given direction with respect to target cells which is cell on the directional virtual line at the reference time (q), wherein the primary detecting means repeats the process with varying the reference time (q) in order; and
line detecting means for detecting cell to which the directional primary flag of one direction and another directional primary flag of opposite direction to the one direction are recorded based on the primary flag pattern recorded by the primary detecting means so that mark indicating part of the line is recorded to said detected cell.

Lines can be extracted quickly and accurately by the device according to the present invention.

(2)(6) The device for extracting line segments from a picture having a plurality of pixels disposed in multidimensional according to the present invention, the device comprises:
pattern generating means for calculating next state to be output from cell of interest to surrounding cells based on the states input from the surrounding cells and the present state of the cell of interest, said cell of interest being selected in turn from cells corresponding to the pixels of picture each of which having active state or inactive state according to value of corresponding pixel of picture and for calculating next state of the cell of interest based on present state of the cell of interest and states input from the surrounding cells to the cell of interest so that a configuration pattern indicating states of cells in multidimensional is generated and recorded, wherein the pattern generating means repeats the process of the generating and recording the configuration pattern;
primary detecting means for detecting movement with time of active cell along with directional virtual line based on the configuration patterns at preceding and following timings (q-k, ...., q-1, q, q+1, ..., q+1) of the reference time (q) recorded by the pattern generating means so that primary flag pattern indicating positions of directional primary flags in multidimensional is generated and recorded by recording the directional primary flags which shows that the cells is part of the directional virtual line of given direction with respect to target cells which is cell on the directional virtual line at the reference time (q), wherein the primary detecting means repeats the process with varying the reference time (q) in order;
secondary detecting means for detecting movement with time of the primary flag along with the directional virtual line based on the primary flag patterns at preceding and following timings (r-p, ...., r-1, r, r+1, ..., r+u) of the reference time (r) recorded by the primary detecting means, said secondary detecting means detecting said movement of the primary flag, direction of which is same with the given direction of the directional virtual line, so that secondary flag pattern indicating positions of directional secondary flags in multidimensional is generated and recorded by recording the directional secondary flags which shows that the cells is part of the directional virtual line of given direction with respect to target cells which is cell on the directional virtual line at the reference time (r), wherein the secondary detecting means repeats the process with varying the reference time (r) in order; and
line detecting means for detecting cell to which the directional secondary flag of one direction and another directional secondary flag of opposite direction to the one direction are recorded based on the secondary flag pattern recorded by the secondary detecting means so that mark indicating part of the line is recorded to said detected cell.

Lines can be accurately extracted without noise influence by the device according to the present invention.

(4) The program for extracting line segments according to the present invention, wherein, at least one of said pattern generating means and said primary detecting means does not carry out the process when all of the cells of the picture at predetermined area around the cell of interest or the target cell are inactive states.

Both swiftness and accuracy are achieved by eliminating process from which meaningful result may not be obtained.

(5) The program for extracting line segments according to the present invention, wherein the process by the pattern generating means, the primary detecting means and line detecting means is repeated in turn, and
further comprises means for halting the process when the relation between number of black cells of the picture and number of the cells which is detected as the part of the line at this time satisfies predetermined condition.

The process can be automatically completed according to the number of currently detected lines.

(7) The program for extracting line segments according to the present invention, wherein, at least one of said pattern generating means, said primary detecting means and said secondary detecting means does not carry out the process when all of the cells of the picture at predetermined area around the cell of interest or the target cell are inactive states.

Both swiftness and accuracy are achieved by eliminating process from which meaning result may not be obtained.

(8) The program for extracting line segments according to the present invention, wherein the process by the pattern generating means, the primary detecting means, the secondary detecting means and line detecting means is repeated in turn, and
further comprises means for halting the process when the relation between number of black cells of the picture and number of the cells which is detected as the part of the line at this time satisfies predetermined condition.

The process can be automatically completed according to the number of currently detected lines by the program according to the present invention.

(9) The program for extracting line segments according to the present invention, the program comprises:
noise cancelling means for eliminating the detected cell from the part of the line when the pixel of the picture corresponding to the detected cell is not black.

Noise can be quickly eliminated by the program according to the present invention.

(10) The program for extracting line segments according to the present invention, wherein said line detecting means records the direction of the detected line.

Not only detecting lines but also direction of the lines can be obtained.

In the present invention, concept of "disposed in multidimensional" comprises a case of disposed in two dimensional plane or a case of disposed in multidimensional space such three dimensional space or four dimensional space.

(11)(12) The device for extracting line segments from a picture having a plurality of pixels disposed in multidimensional according to the present invention, the device comprises:
pattern generating means for calculating next state to be output from cell of interest to surrounding cells based on the states input from the surrounding cells and the present state of the cell of interest, said cell of interest being selected in turn from cells corresponding to the pixels of picture each of which having active state or inactive state according to value of corresponding pixel of picture and for calculating next state of the cell of interest based on present state of the cell of interest and states input from the surrounding cells to the cell of interest so that a configuration pattern indicating states of cells in multidimensional is generated and recorded, wherein the pattern generating means repeats the process of the generating and recording the configuration pattern; and
line judging means for detecting movement of active cell or inactive cell based on series of the configuration patterns recorded by the pattern generating means so that the line is judged based on the movement of cell.

Lines can be accurately detected by the device according to the present invention.

(13)(14) The device for generating configuration pattern to be used for extracting line segments from a picture having a plurality of pixels disposed in multidimensional according to the present invention, the device comprises:
pattern generating means for calculating next state of a cell of interest based on present state of the cell of interest and states input from the surrounding cells to the cell of interest, said cell of interest being selected in turn from cells corresponding to the pixels of picture each of which having active state or inactive state according to value of corresponding pixel of picture so that a configuration pattern indicating states of cells in multidimensional is generated and recorded, wherein the pattern generating means repeats the process of the generating and recording the configuration pattern;
wherein said pattern generating means generates the states input from the surrounding cells to the cell of interest based on the states input from the surrounding cells and the present state of the cell of interest.

Time series configuration patterns which may be used for extracting the lines can be generated.

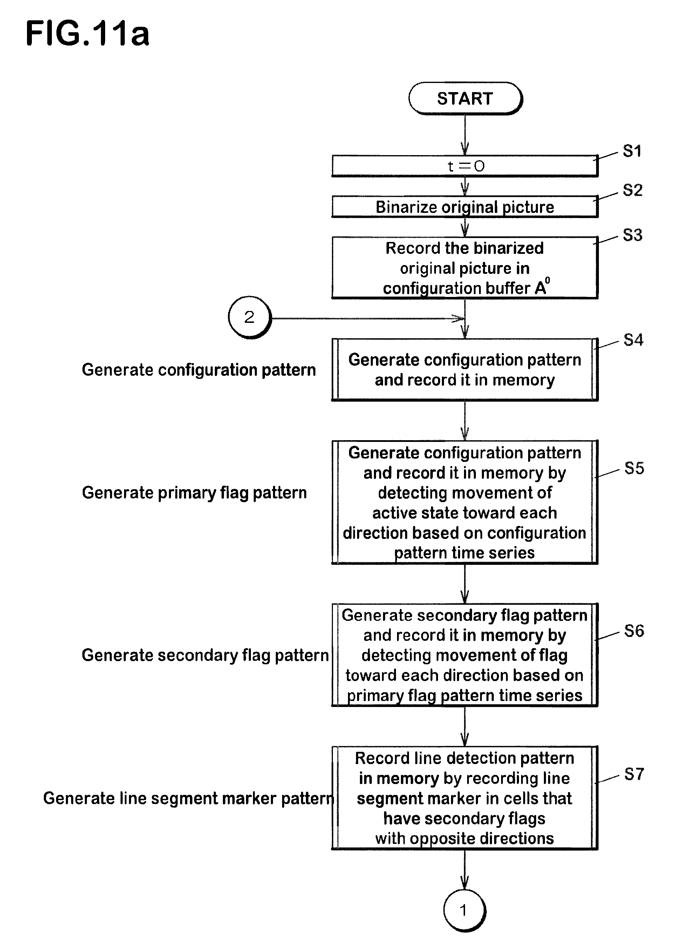

"Pattern generation method" is means for generating a configuration pattern. It corresponds to Step S4 of Fig. 11a in the embodiment.

"Primary detecting means" is means for detecting the movement of the active or inactive cell based on the series of the configuration patterns. It corresponds to Step S5 of Fig. 11a.

"Secondary detecting means" is means for detecting the movement of the cell having the primary flag or not having the primary flag based on the series of the primary flag patterns. It corresponds to Step S6 of Fig. 11a.

"Line segment detecting means" is means for detecting the line segment directly from the configuration pattern or based on the primary flag or secondary flag obtained from the configuration pattern. It corresponds to Step S7 of Fig. 11a in the embodiment.

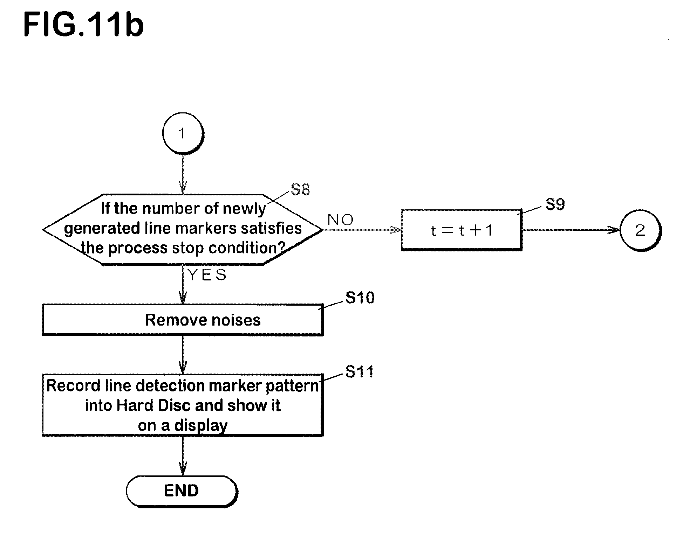

"Halting means" is means for halting the process according to the detecting situation of the flag or the line segment. It corresponds to Step S8 of Fig. 11b.

"Noise eliminating means" is means for eliminating the component which seems to be noise. It corresponds to Step S10 of Fig. 11b.

"Line judging means" is means for detecting the line segment directly from the configuration pattern or based on the flag etc. obtained from the configuration pattern. It corresponds to the primary detecting means, secondary detecting means, lien segment detecting means and line detecting means in the embodiment.

"Cellular automaton" means a model that determines the states of an array of cells where the state of each cell at time t is determined based on at least the state of the cell in question and the states of the surrounding cells at previous timing.

For example, as shown in the embodiment, the state of each cell at time t may be determined based on, at time t-1, the state of the cell in question and the state of the input received from the surrounding cells. Here, as for the input received from the surrounding cells, it is equivalent to the output when viewed from the perspective of each surrounding cell. As for each cell (the cell in question), the state of the output toward other cells is determined in the following manner: based on the state of the input that the cell in question has received from the other cells at time t-1, and the present state of the cell in question at time t-1, the state that should be output at time t to cells other than the cell in question is calculated.

Thus, as shown in the embodiments, in order to determine the state of the cell of interest at time t, the inputs from the surrounding cells at time t-1 are used and in order to determine the states of the inputs from the surrounding cells, the states of the surrounding cells are used. Therefore, in the embodiments, the state of the cell of interest at time t is determined, though indirectly, based on the state of the cell of interest and the states of the surrounding cells at time t-1.

The above-mentioned method shown in the embodiment has been originally designed by the inventor. It has been classified in the specification as a type of cellular automaton.

"Configuration pattern" means pattern (such as one dimension array, two dimensional array or multi-dimensional array) generated by the above mentioned automaton.

Concept of "program" includes not only a program that can be directly executed by the CPU, but also a program in the form of source code, a program that has been compressed, a program that has been encrypted, and so on.

### Brief Description of Drawings

[Figure 1] A functional block diagram of the a line segment detection device embodying a present invention.
[Figure 2] Figure 2A shows an original picture. Figure 2B shows input signals from the surrounding cells.
[Figure 3a] Configuration pattern (original picture) and primary flag pattern PF at time t=0.
[Figure 3b] Secondary flag pattern SF and line segment marker pattern at time t=0.
[Figure 3c] Configuration pattern (original picture) and primary flag pattern PF at time t=1.
[Figure 3d] Secondary flag pattern SF and line segment marker pattern at time t=1.
[Figure 3e] Configuration pattern (original picture) and primary flag pattern PF at time t=2.
[Figure 3f] Secondary flag pattern SF and line segment marker pattern at time t=2.
[Figure 3g] Configuration pattern (original picture) and primary flag pattern PF at time t=3.
[Figure 3h] Secondary flag pattern SF and line segment marker pattern at time t=3.
[Figure 3i] Configuration pattern (original picture) and primary flag pattern PF at time t=4.
[Figure 3j] Secondary flag pattern SF and line segment marker pattern at time t=4.
[Figure 3k] Configuration pattern (original picture) and primary flag pattern PF at time t=5.
[Figure 3l] Secondary flag pattern SF and line segment marker pattern at time t=5.
[Figure 3m] Configuration pattern (original picture) and primary flag pattern PF at time t=6.
[Figure 3n] Secondary flag pattern SF and line segment marker pattern at time t=6.
[Figure 3O] Configuration pattern (original picture) and primary flag pattern PF at time t=7.
[Figure 3p] Secondary flag pattern SF and line segment marker pattern at time t=7.
[Figure 3q] Configuration pattern (original picture) and primary flag pattern PF at time t=8.
[Figure 3r] Secondary flag pattern SF and line marker pattern at time t=8.
[Figure 3s] Configuration pattern (original picture) and primary flag pattern PF at time t=9.
[Figure 3t] Secondary flag pattern SF and line segment marker pattern at time t=9.
[Figure 3u] Configuration pattern (original picture) and primary flag pattern PF at time t=10.
[Figure 3v] Secondary flag pattern SF and line segment marker pattern at time t=10.
[Figure 4] Explains the detection process of primary flags.
[Figure 5] Explains an example of the primary flags recorded.
[Figure 6] Explains the detection process of secondary flags.
[Figure 7] Explains the detection process of secondary flags.
[Figure 8] Explains the example of the secondary flags recorded.
[Figure 9] Explains the detection process of line segment marker flags
[Figure 10] The hardware configuration of an embodiment of the line segment extraction device being executed via a CPU
[Figure 11a] Flow chart of the line extraction program
[Figure 11b] Flow chart of the line extraction program
[Figure 12] Flow chart of the generation of configuration patterns
[Figure 13] Explains process omission depending on the original picture
[Figure 14] Calculation of the output signal to the surrounding cells
[Figure 15] Shows the contents of the buffer where output to surrounding cells is temporarily recorded
[Figure 16] Shows the contents of the buffer where input from surrounding cells is temporarily recorded
[Figure 17] Flow chart of the generation of primary flag pattern PF
[Figure 18] Flow chart of the generation of primary flags concerning the top to bottom virtual lines
[Figure 19] Flow chart to generate secondary flag patterns PF
[Figure 20] Flow chart of the generation of secondary flags concerning top to bottom virtual lines
[Figure 21] Shows another example of secondary flag detection
[Figure 22] As an example of the embodiment of this invention, shows the results of a line segment extracted via the line segment extraction program
[Figure 23] As an example of the embodiment of this invention, shows the results of a line segment extracted via the line segment extraction program
[Figure 24] As an example of the embodiment of this invention, shows the results of a line segment extracted via the line segment extraction program
[Figure 25] As an example of the embodiment of this invention, shows the results of a line segment extracted via the line segment extraction program
[Figure 26] Shows detailed results of line segment extraction

### Description of Embodiments

### 1. Overall Structure

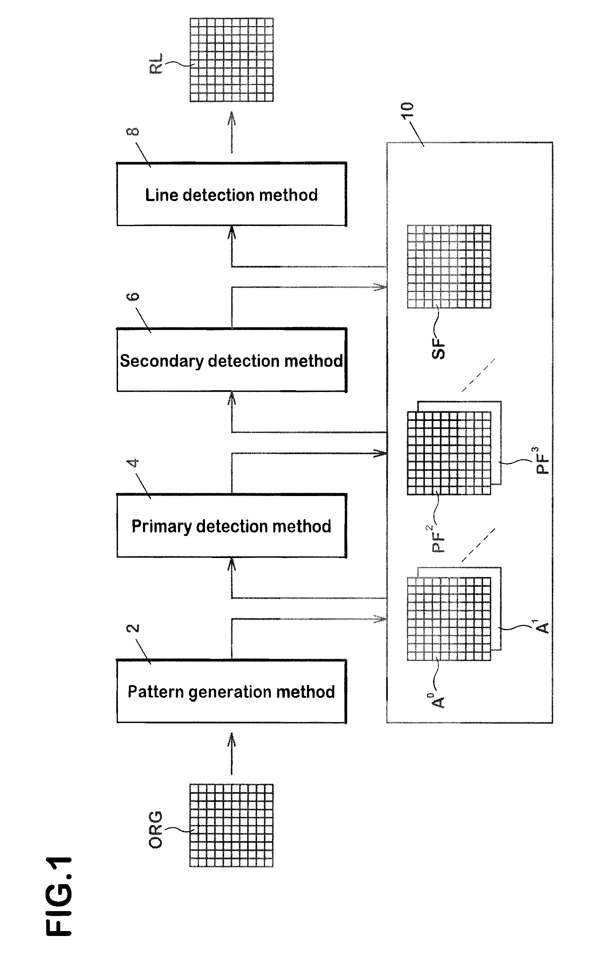

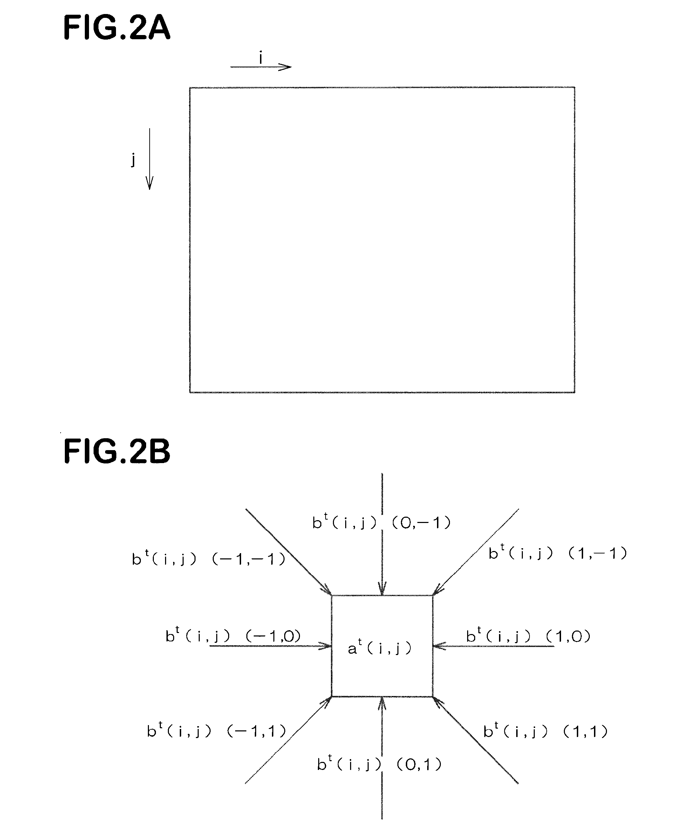

Figure 1 shows a functional block diagram of the line extraction device of an embodiment according to the present invention. Pattern generation means 2 receives an original two-dimensional binary picture ORG to be processed. For example, shown in Figure 2A, the original picture ORG is a binary picture of width I and of height J. Each pixel shown as "1" represents a black pixel and "0" represents a white pixel. In pattern generation block 2 at each pixel, "1" represents active state while "0" represents inactive state.

### (1) Generation of the Configuration Pattern

Pattern generation block 2 determines the next state of each cell (a cell corresponds to a pixel) respectively, according to the cellular automaton. The next state, i.e., a^{t+1}(i, j) is determined using the current state of the said cell of interest a^{t}(i, j) and the input states b^{t}(i, j)(m, n) from the surrounding cells (e.g. eight cells surrounding the cell of interest). (see Figure 2B) i and j represent the address of the cell in the picture.

It is clear by the Figure that b^{t}(i, j)(0, -1) is an input state from the surrounding cell above adjacent to the cell of interest, b^{t}(i, j)(1, -1) is an input state from the surrounding cell right above adjacent to the cell of interest, ....., b^{t}(i, j)(-1, -1) is an input state from the surrounding cell left bottom adjacent to the cell of interest. It will be described later how input state b^{t}(I,j)(m,n) from the surrounding cell is determined.

Pattern generation means 2 determines whether next state of each cell is "active" or "inactive" and generates pattern A^{t+1} (configuration pattern) in the next timing. The generated configuration pattern A^{t+1} is recorded in record section 10.

In the above processing, pattern generation means 2 determines next output c^{t+1}(i,j)(m,n), which is input b^{t+1}(i,j)(-m,-n) of a surrounding cell, based on the current state of the cell of interest a^{t}(i,j) and the input from the surrounding cell b^{t}(i,j)(m,n).

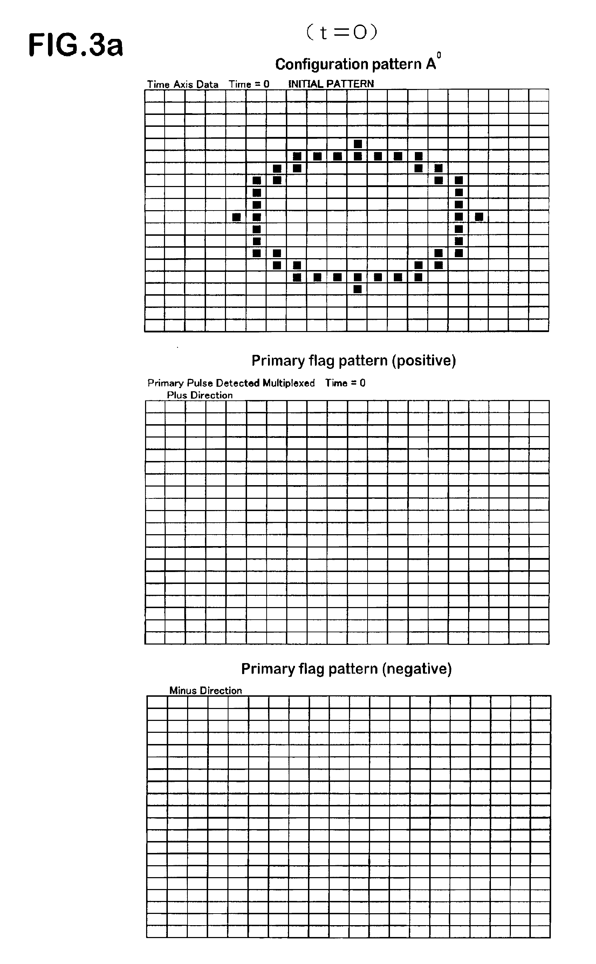

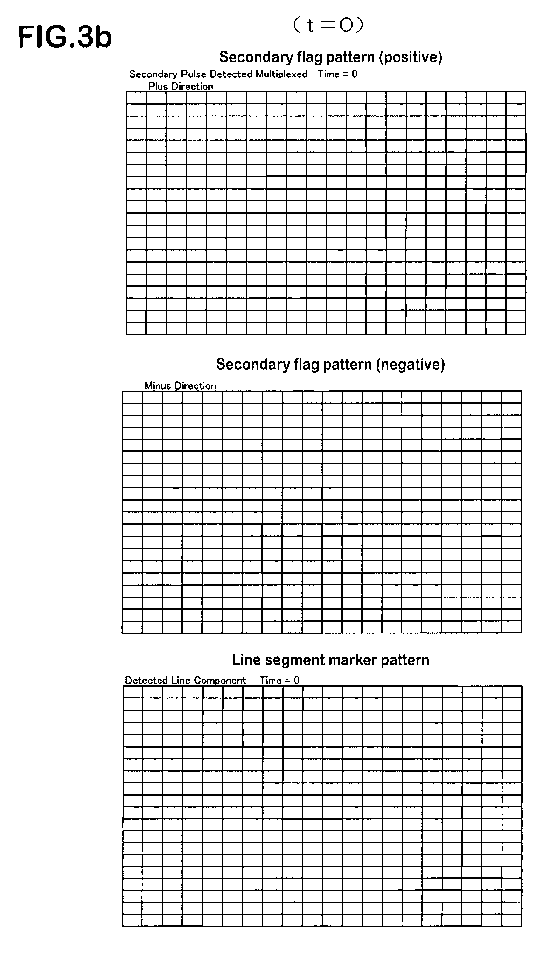

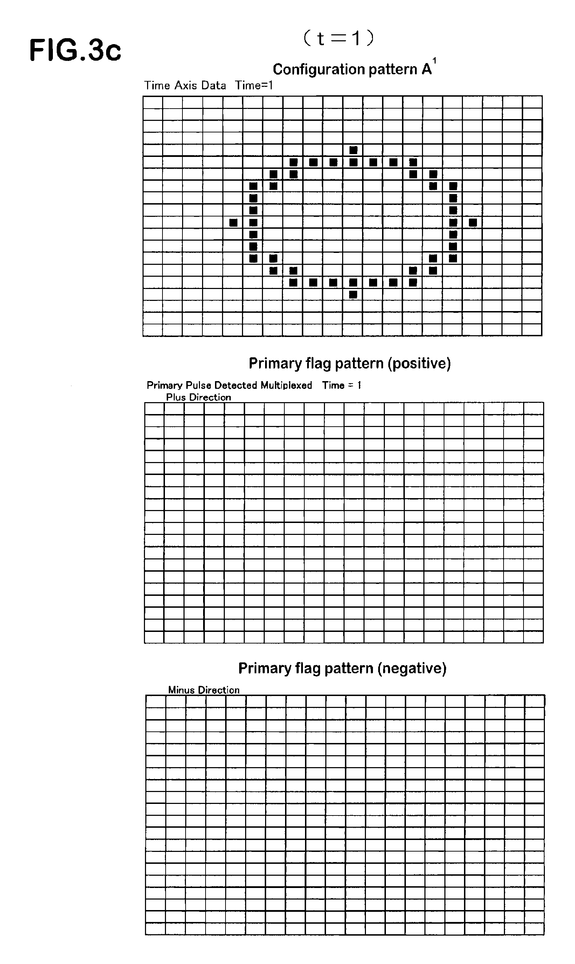

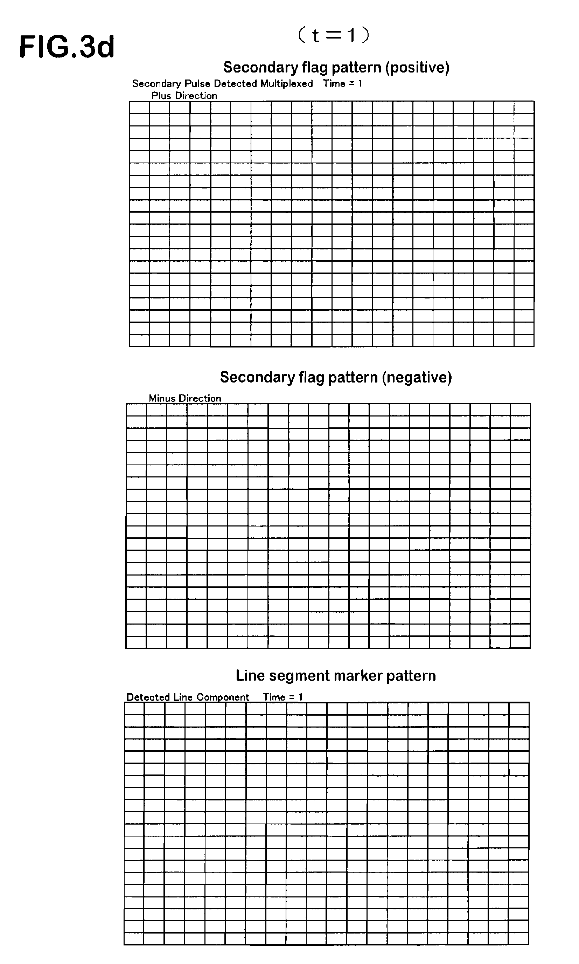

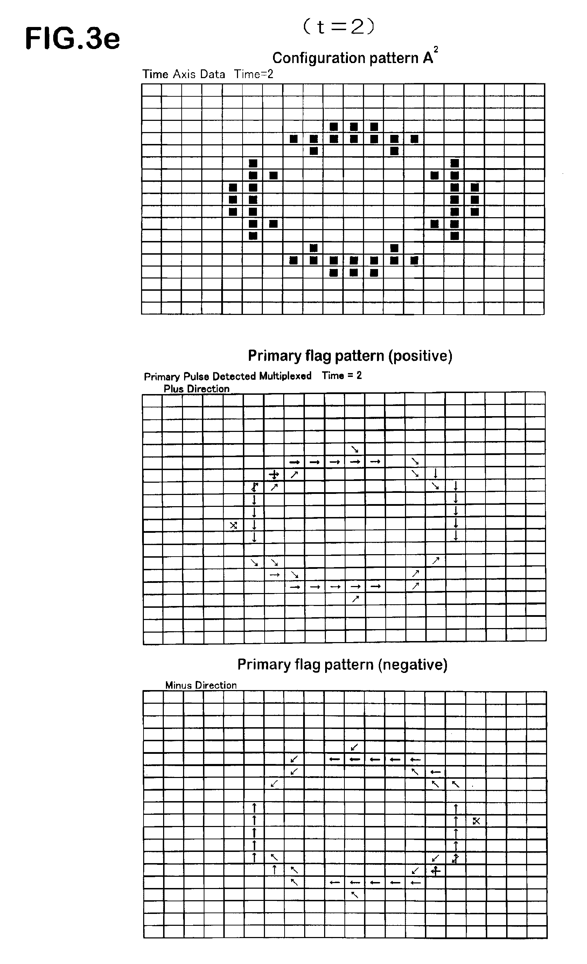

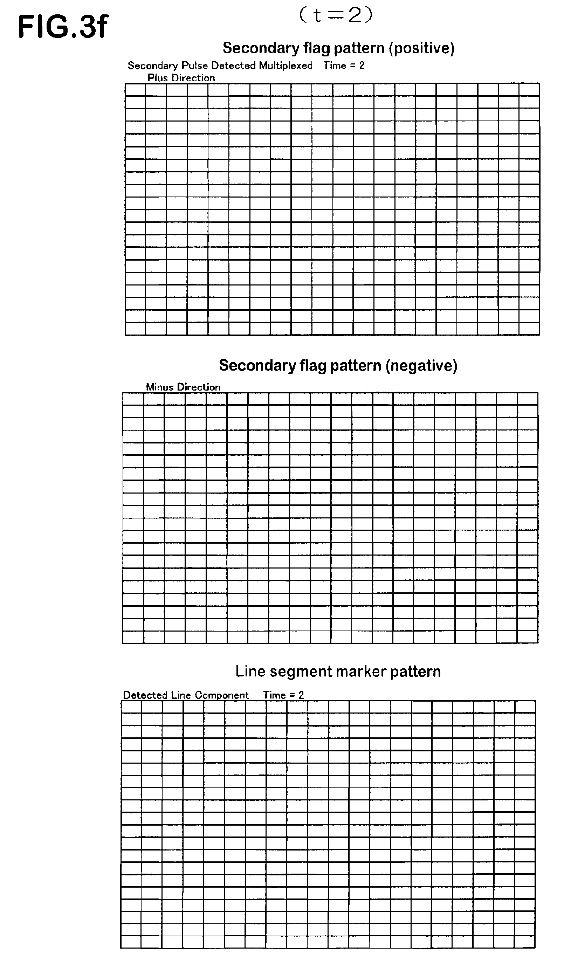

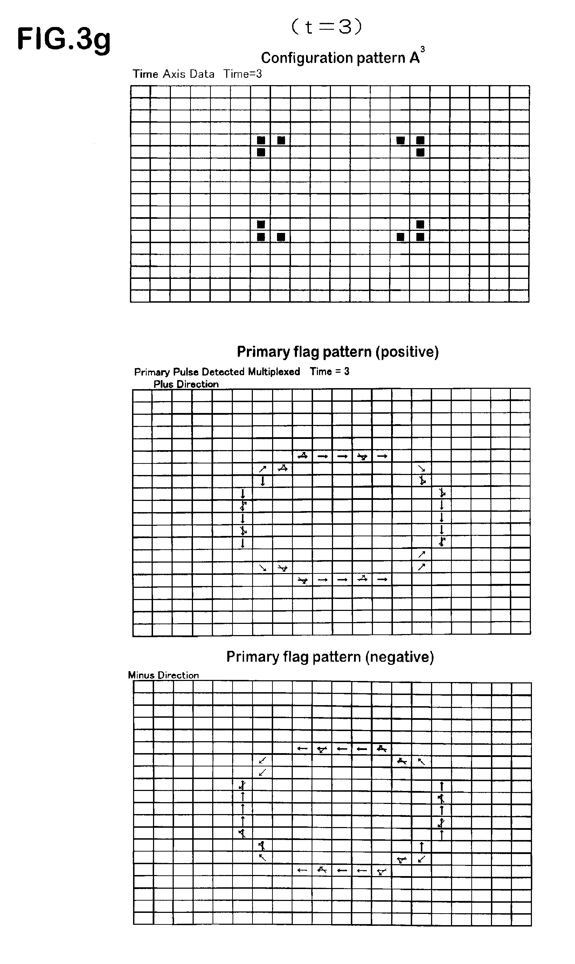

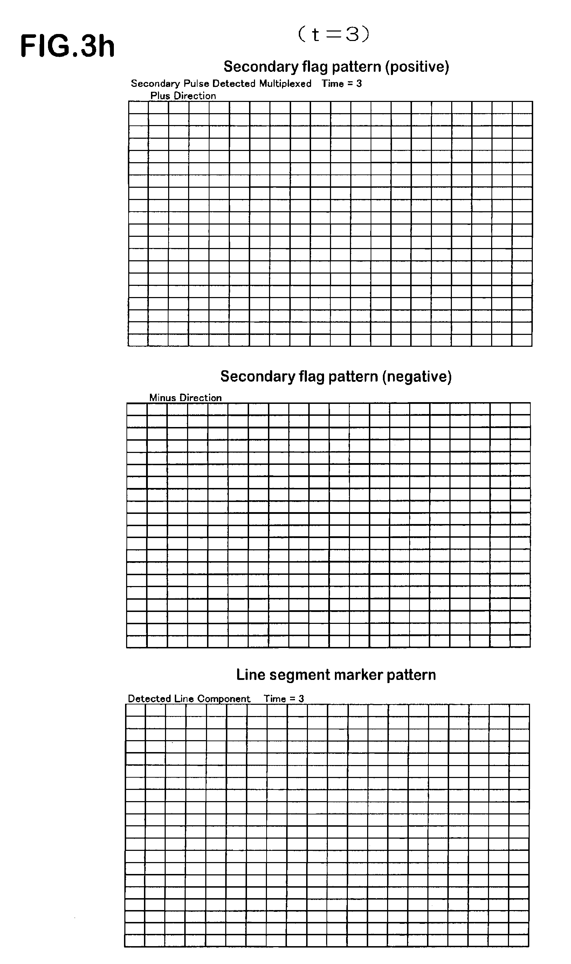

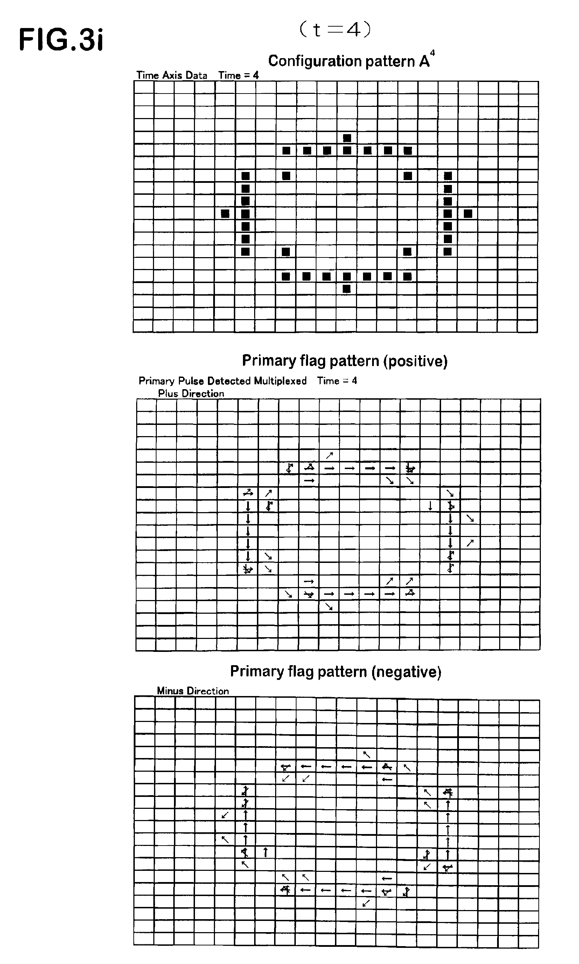

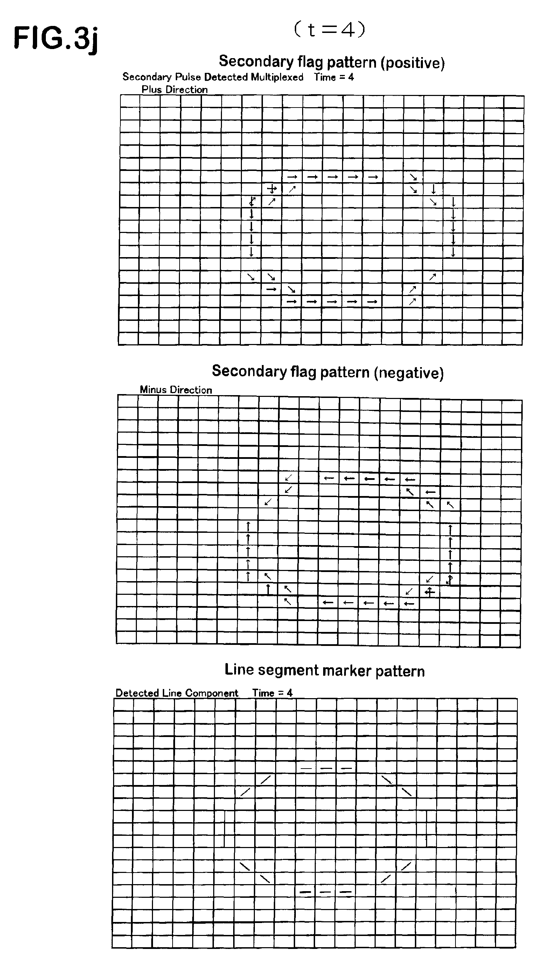

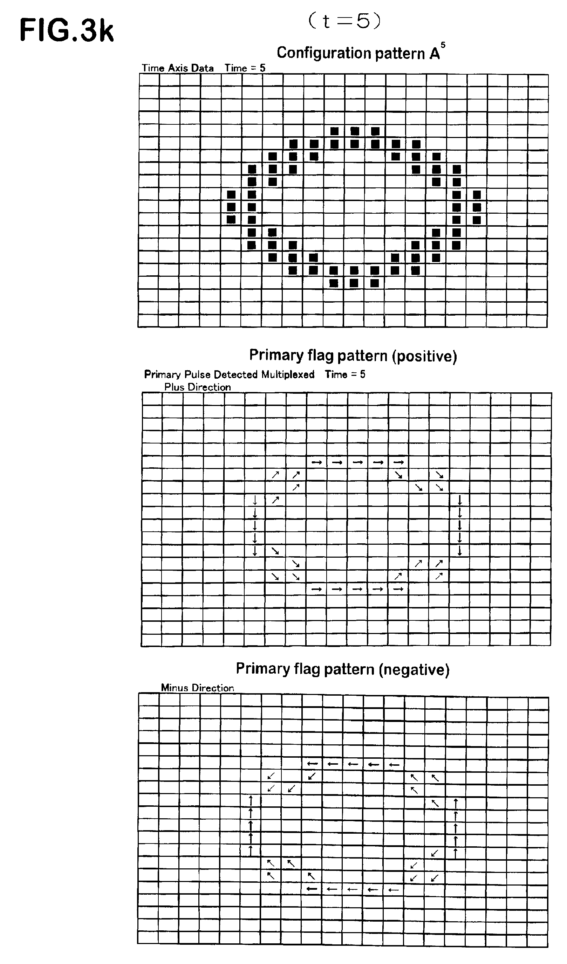

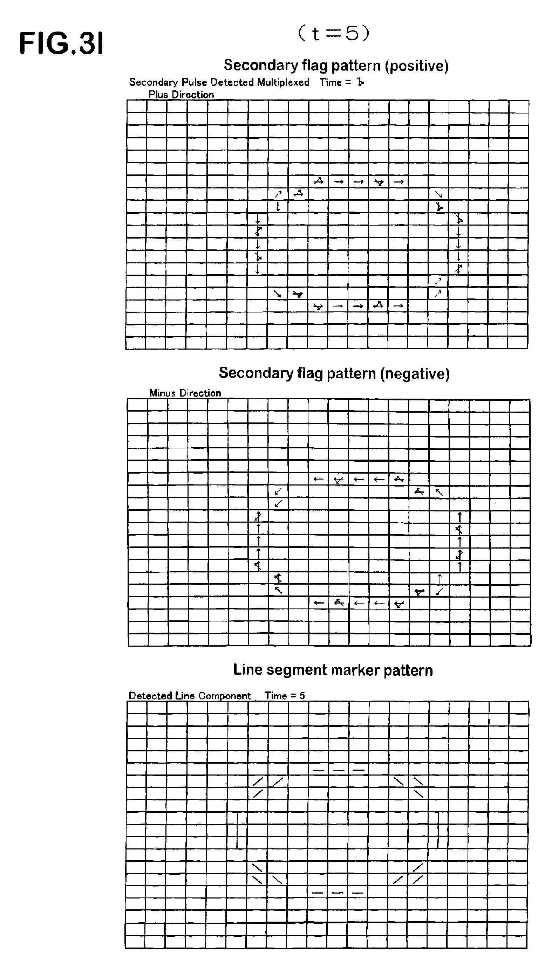

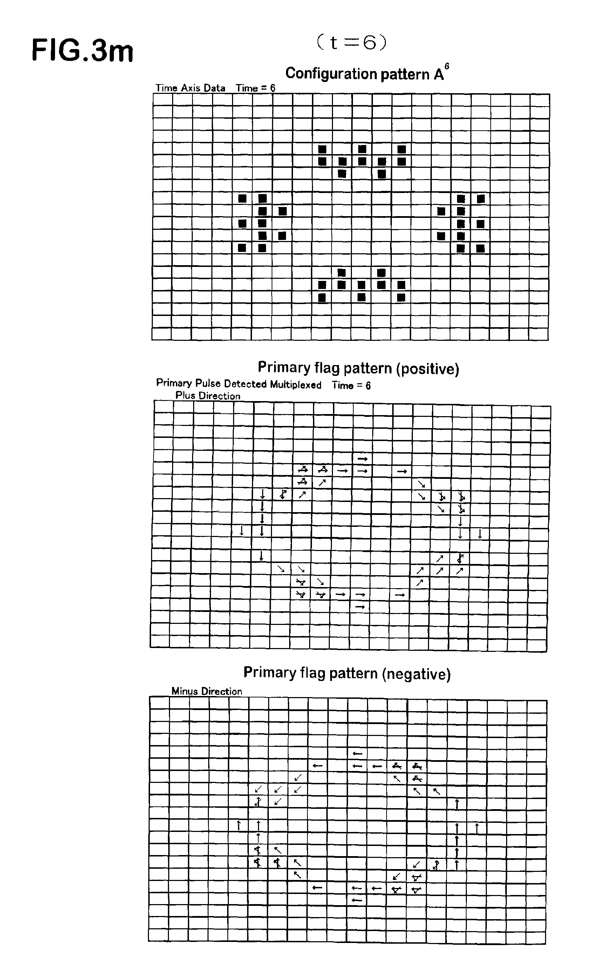

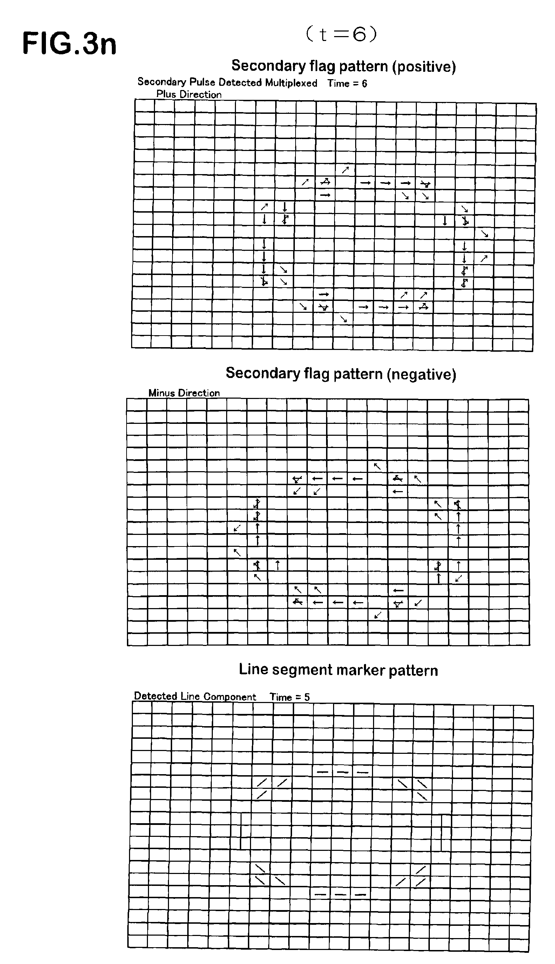

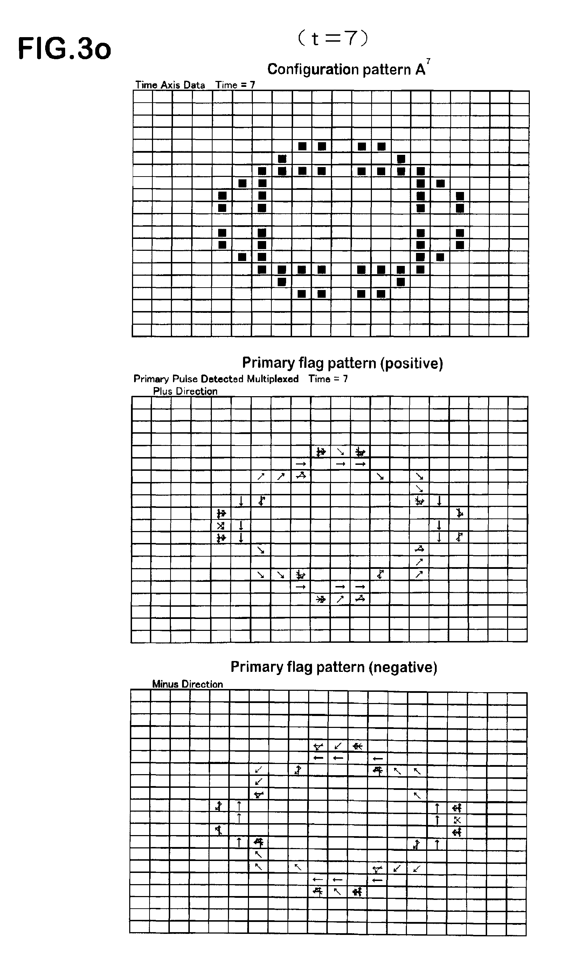

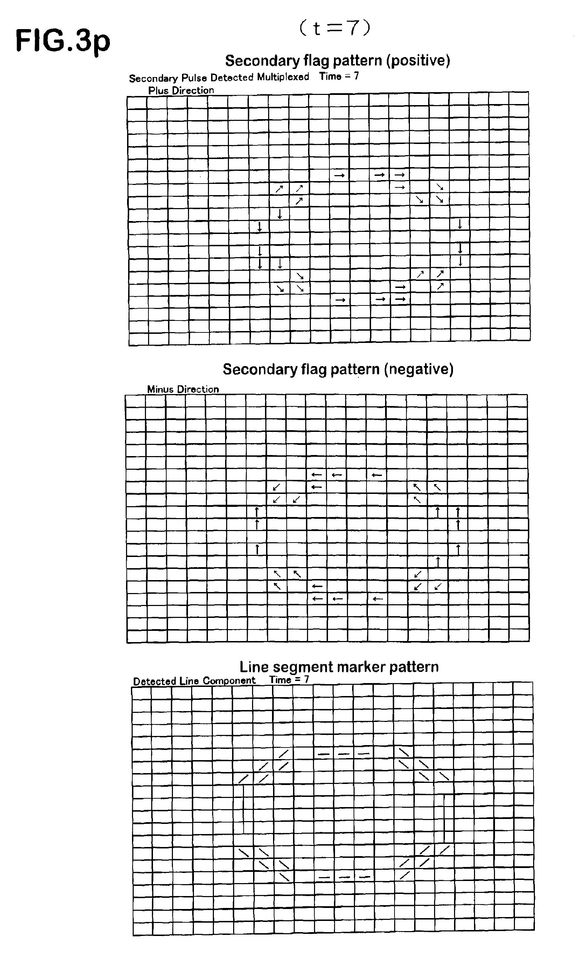

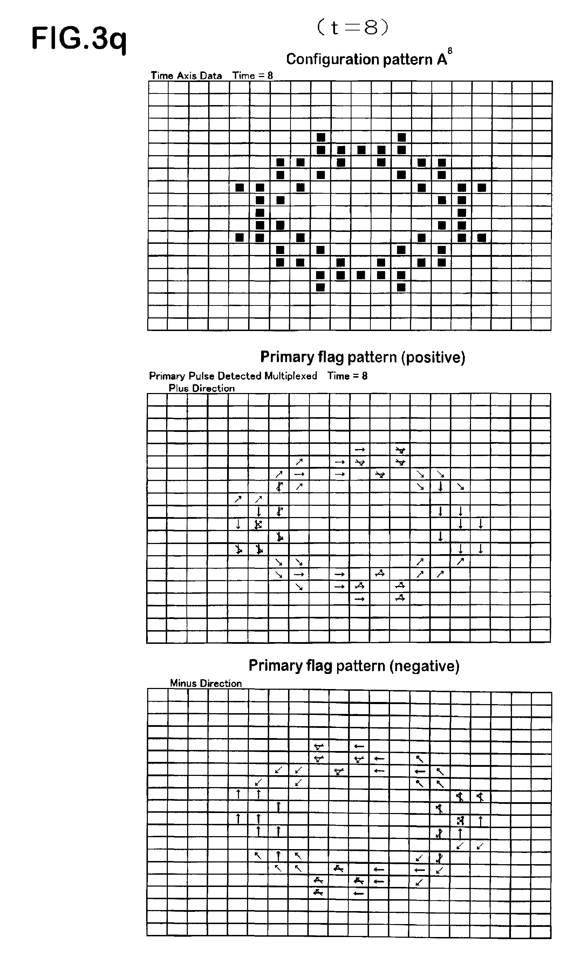

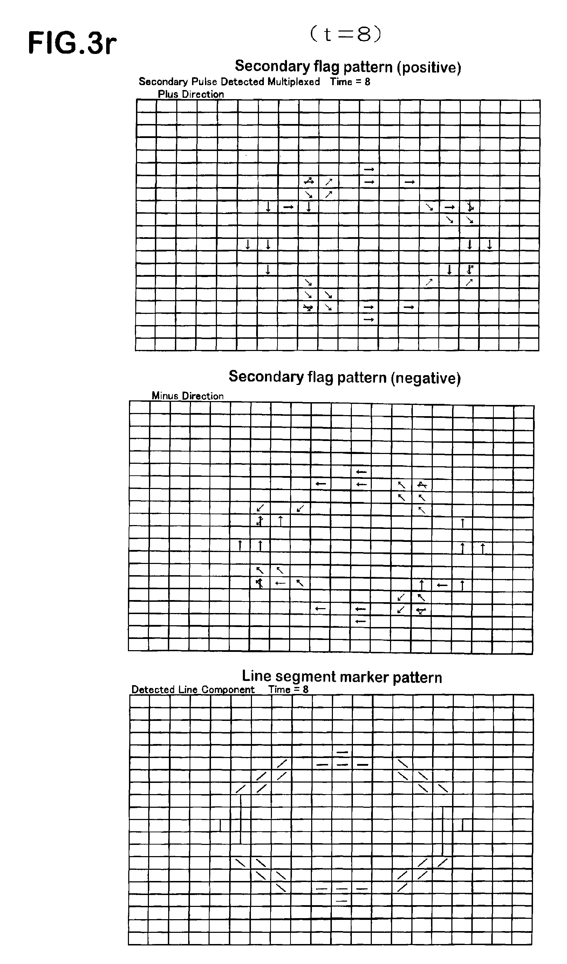

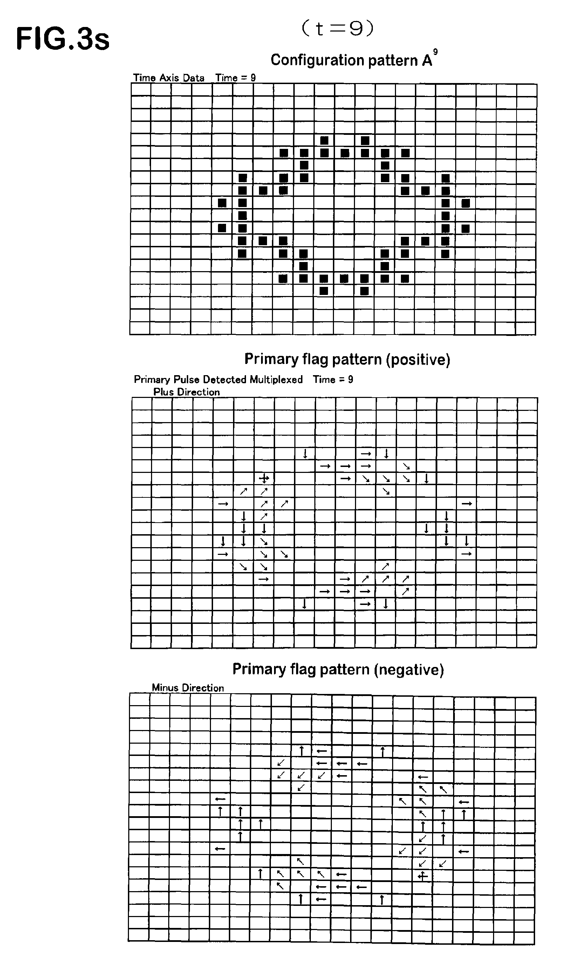

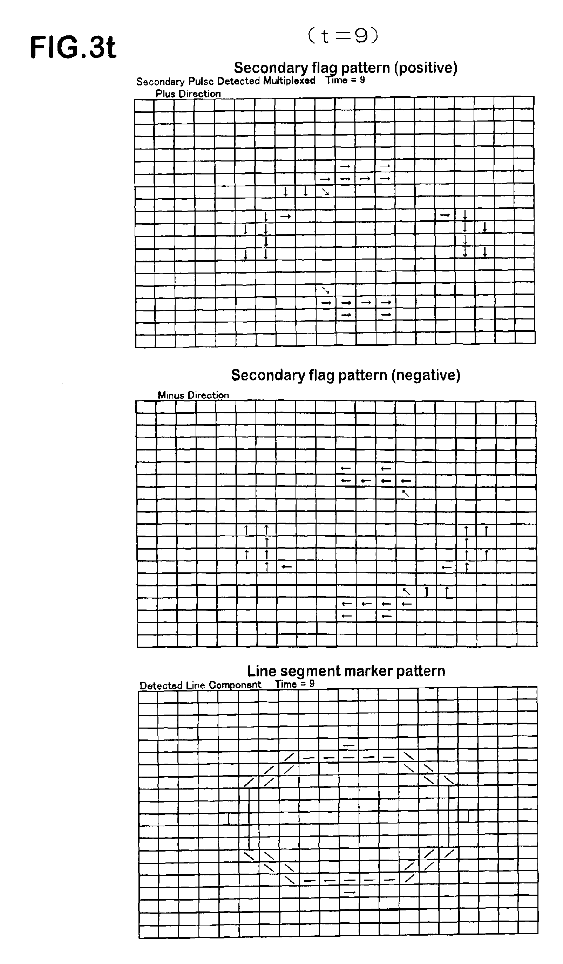

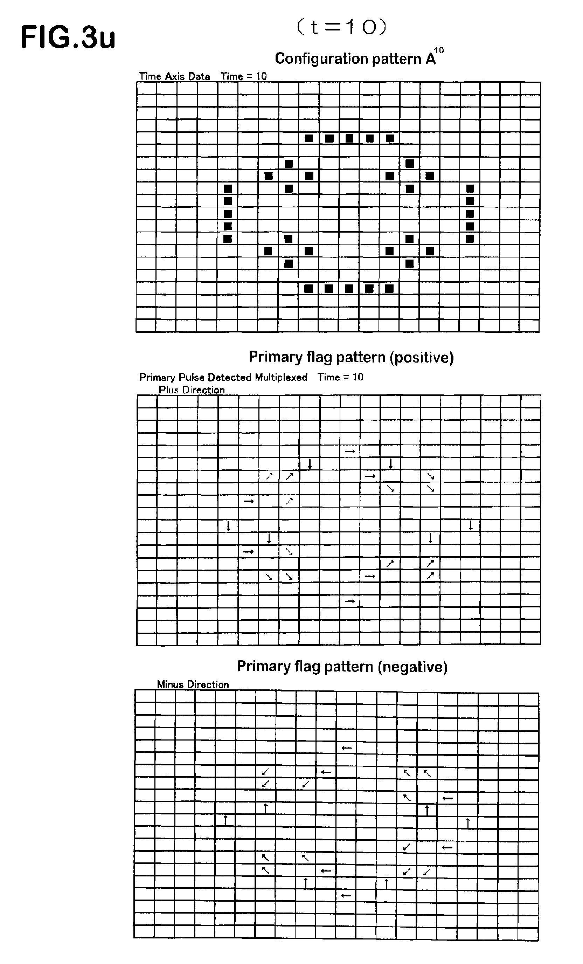

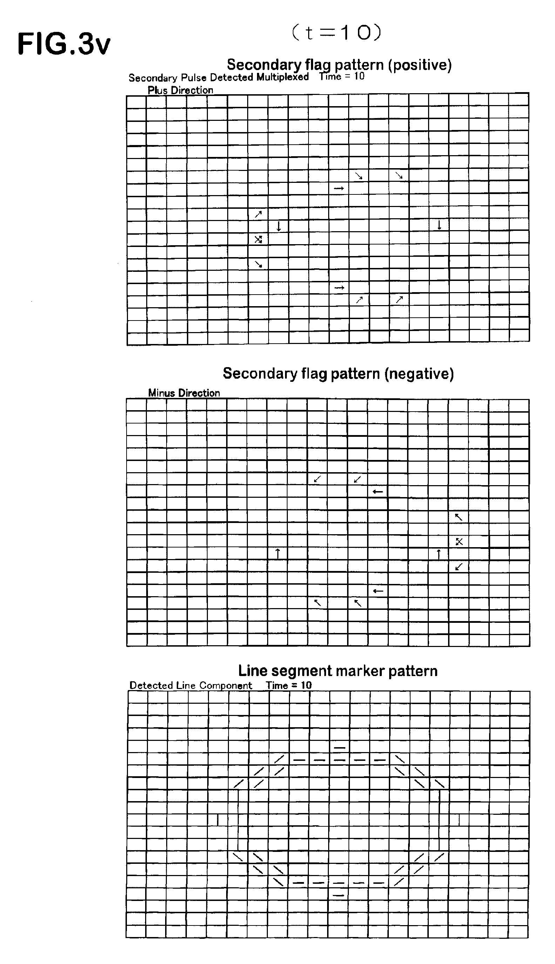

Pattern generation means 2 again generates and stores the next configuration pattern A^{t+2} based on the generated configuration pattern A^{t+1} using the same method as written in the above description. Therefore, the storing part 10 stores the configuration patterns, A⁰, A¹, A² ...as shown in the top of Figures 3a, 3c, 3e... 3u, respectively. In Figure 3, black parts are "active" cells. A⁰ denotes the original picture.

### (2) Generation of primary flag pattern

Primary detection means 4 detects the movement of the "active state" cell along the virtual line with a prescribed direction as time elapses using a predetermined number of patterns (from configuration pattern A^{q-2} to A^{q+2}) before and after configuration pattern A^{q} at prescribed time q recorded in record section 10, and sets primary detection flags for detecting the line at each position of the cell of interest.

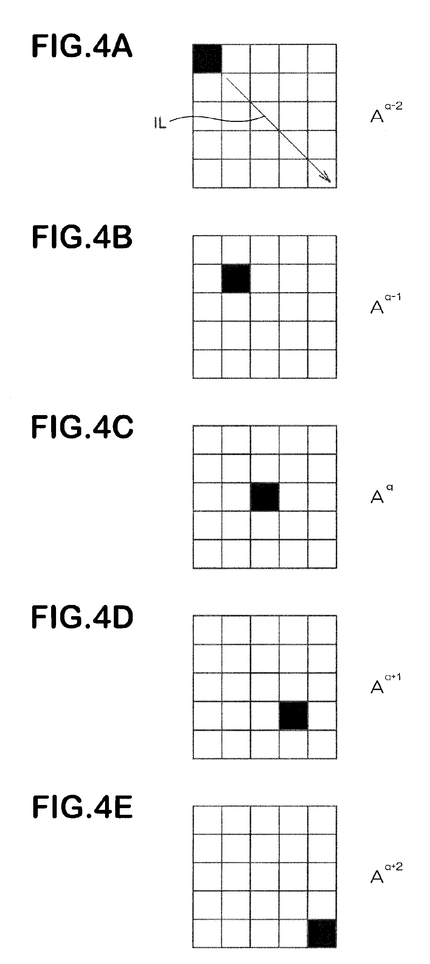

The above process is depicted in Figure 4. Figure 4C shows 5x5 cells whose center is the cell of interest of configuration pattern A^{q} at the given time q. A black cell implies that the cell is "active state". Figures 4A and 4B show the cells of configuration pattern A^{q-2} at the time q-2 which is two time points before the given time q, and configuration pattern A^{q-1} at time q-1 which is one time point before the given time q, respectively. Figures 4D and 4E show configuration pattern A^{q+1} at time q+1, which is one time point after the given time t and configuration pattern A^{q+2} at time q+2 which is two time points after the given time t, respectively.

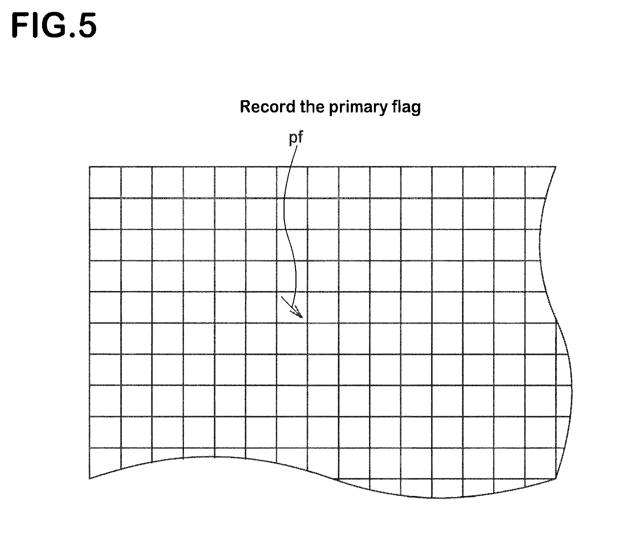

As shown in Figures 4A through 4E, primary detection means 4 detects the "active state" that moves along virtual line IL extending from the upper left to the bottom right. That is to say, regarding A^{q-2}, A^{q-1}, A^{q}, A^{q+1} and A^{q+2} respectively, it is determined whether or not the conditions in which the black parts in Figures 4A-4E are in "active state" are satisfied. In this embodiment, in Figures 4A through 4E, when more than three cells out of five cells meet the conditions, primary detection means 4 assumes that the cell of interest (center cell in Figure 4C) constitutes a part of virtual line IL. Primary detection means 4 sets a primary flag in cells corresponding to the cell of interest (center cell in Figure 4C) of the area for storing primary flags (corresponding to the cell in column i, row j). Further, this primary flag pf not only shows that the cell of interest is determined as a part of virtual line IL, but also shows the direction of the virtual line IL as shown in Figure 5.

In the above description, the virtual line, which extends from the upper left to the bottom right, is described. The other eight directions; from the top to bottom, from the upper right to the bottom left, from right to left, from the bottom right to the upper left, from the bottom to top, from the bottom left to the upper right, from left to right, and from the upper left to the bottom right, are also checked and flags are set.

Primary flag detection means 4 performs the detection procedure described in the above paragraphs through all the cells (each cell is treated as the cell of interest in order) in the picture. Thus primary flag patterns PF^{t} are stored in the area for storing primary flags.

As described in the above description, primary detection means 4 calculates the primary flag patterns and stores them while shifting predetermined time q. Thus, the primary flag patterns of each time are recorded in record section 10. The middle and bottom of Figures 3a, 3c, 3e ... 3u show the primary flag patterns obtained from the configuration patterns shown in the top of the same figures. Note that because of the restriction of the page size of this document, the primary flag patterns of top to bottom, left to right, top left to bottom right and bottom left to top right flags are shown in the middle sections of the figures. And the primary flag patterns of bottom to top, right to left, bottom right to top left and top right to bottom left flags are shown in the lower sections of the figures.

### (3) Generation of secondary flag patterns

Next, secondary detection means 6 in Figure 1 detects the movement over time of cell which is set the primary flags along the virtual line with a specified direction using the primary flag pattern PF^{r} at time r and the primary flag patterns PF^{r-2} to PF^{r+2} at predetermined timing before and after time r and sets the secondary flags for detecting the line elements at each position of the cell of interest.

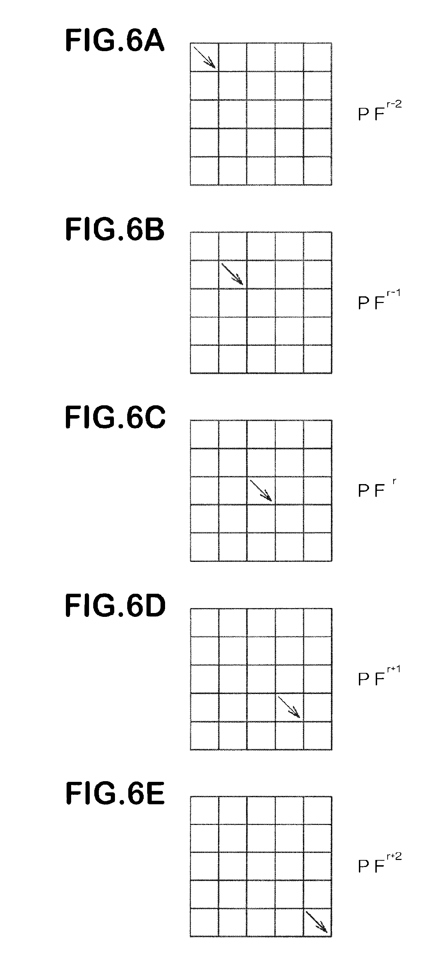

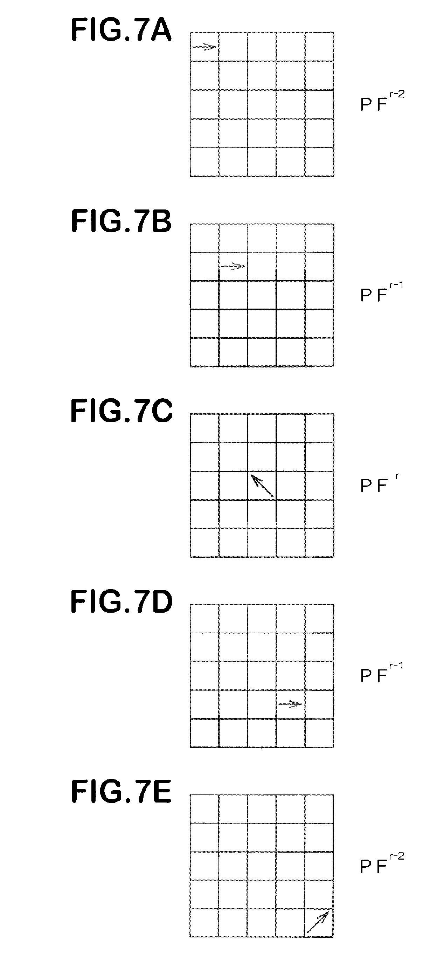

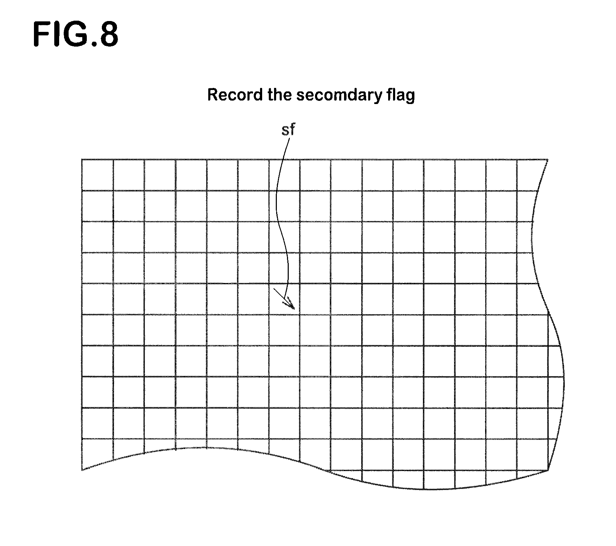

This procedure is similar to that of the primary flag. When it is assumed to be a part of a line, the secondary flag is stored in the area for storing secondary flags. As shown in Figure 6, a secondary flag is set only when the directions of the primary flag and of the primary flag's movement (the direction of the virtual line) correspond. Note that this secondary flag sf not only shows that the cell is determined to be a part of virtual line IL, but also shows the direction of virtual line IL as shown in Figure 8. This is the same with the primary flag. Further, the secondary flag is not set if the direction of the primary flags' movement doesn't correspond to the direction of the primary flag, even if movement of the primary flags is detected. This is shown in Figure 7.

Secondary detection means 6 performs the procedure of calculating and storing secondary flags as described in the above description, while moving prescribed time t. In record section 10, the secondary flags generated for each time point are stored as one secondary flag pattern SF. Furthermore, patterns are generated at each time point concerning the primary flag pattern due to the necessity of the detection of its temporal movement. However, regarding the secondary flag pattern, there is no necessity of detection of its temporal movement, so secondary flags, each of which is generated at each time point, may be gathered and stored as one pattern.

In the top and the middle of Figure 3b, 3d, 3f, ..., 3v, secondary flag patterns SF, which are obtained based on primary flag patterns of Figure 3a, 3c, 3e, ..., 3u, are shown. Note that, for convenience's sake, these figures show only flags that are newly generated according to that time point.

### (4) Line detection

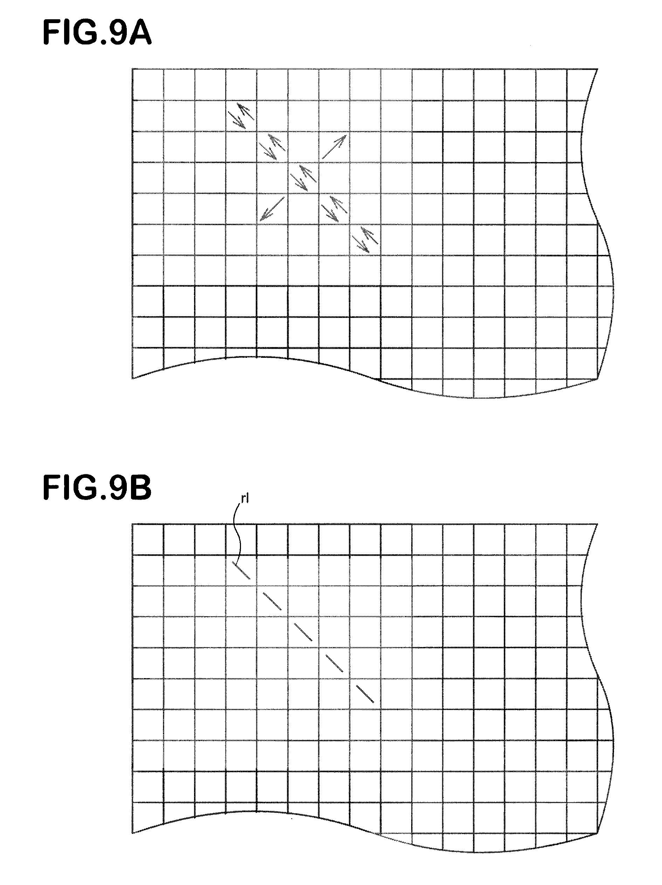

Next, line detection means 8 detects cells in which a secondary flag which is of the opposite direction of the same cell, is set, based on stored secondary flag pattern SF. Thus, a line marker is stored in the area for storing line markers. For example, if secondary flag pattern SF is like Figure 9A, as shown in Figure 9B, line marker rl is stored only in the cells which have secondary flags of the direction from the bottom right to the upper left and from the upper left to the bottom right. Note that line detection means 8 performs the same detection regarding cells which have secondary flags of the direction from bottom to top and top to bottom, the cells which have secondary flags of the direction from the bottom left to the upper right and from the upper right to the bottom left, and the cells which have secondary flags of the direction from left to right and from right to left. Further, line marker rl also shows line direction as shown in Figure 9B.

Thus, line pattern RL is generated, and is output as a line extraction result. The bottom of Figure 3b, 3d, 3f, ..., 3v shows extracted line marker patterns. As is apparent from Figure 3v, the original image's line segment (configuration pattern A⁰) of Figure 3a is extracted properly.

### 2. Hardware configuration

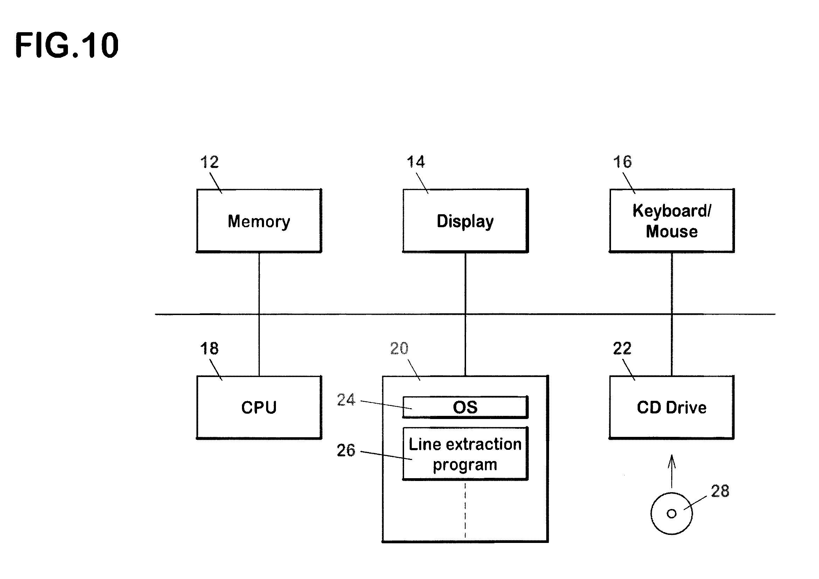

Figure 10 shows a hardware structure of the line extraction device shown in Figure 1 with a CPU. Memory 12, display 14, keyboard and mouse 16, hard disk 20 and CD-ROM drive 22 are connected to the CPU 18. Memory 12 is used as buffers or as working area. Hard disk 20 stores an operating system (OS) 24, line extraction program 26 and others. The line extraction program 26 cooperates with the OS 24 and displays its functions. These programs are installed on hard disk 20 through CD-ROM drive 22 from CD-ROM 28.

### 3. Line extraction program

Figure 11 shows the flow chart of line segment extraction program 26, which is stored on Hard Disk 20. CPU 18 performs the above (1) generation of the configuration patterns, (2) generation of the primary flag patterns, (3) generation of the secondary flag patterns, and (4) generation of the line marker patterns.

At first, CPU 18 set 0 to t (Step S1). Next, an original image is stored on the Hard Disk 20, and is binarized (Step S2). And then, CPU 18 records the binarized original image and records it in the configuration buffer (the area placed in memory 12) as configuration pattern A⁰ at time t=0.

### (1) Generation of configuration pattern A.

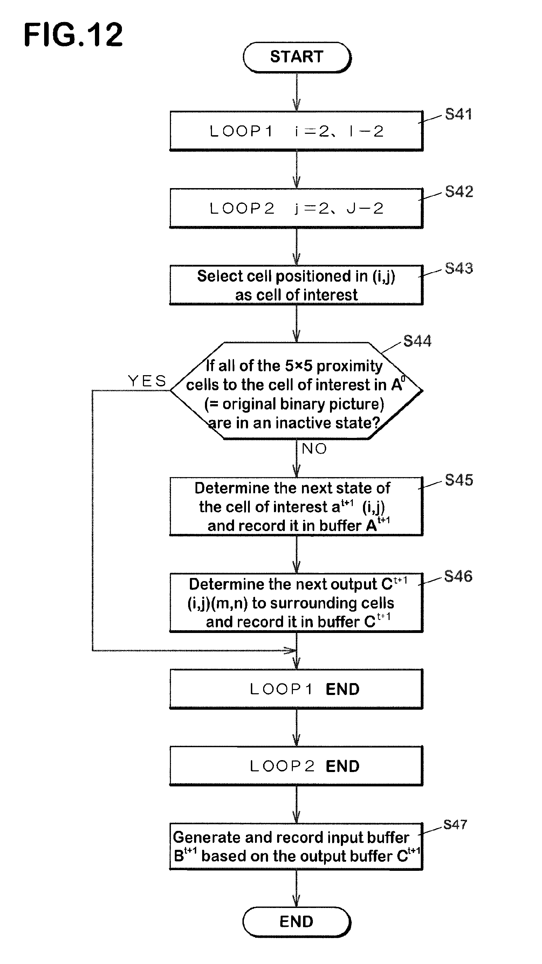

Next, CPU 18 generates configuration pattern A¹ at time t=1 and stores it in the configuration buffer (Step S4). Figure 12 shows the precise configuration pattern generation process.

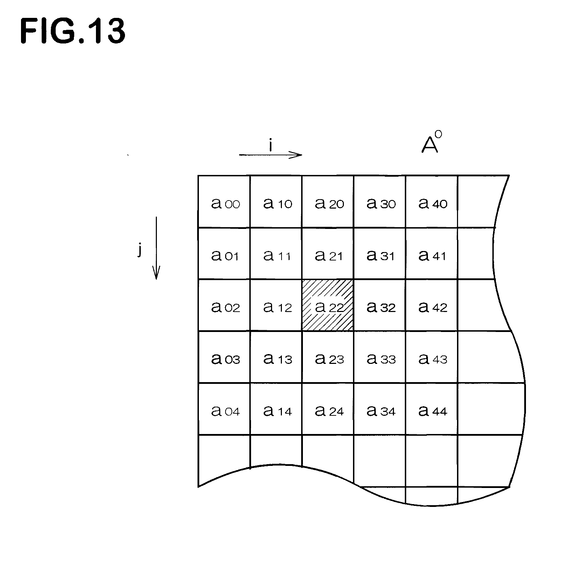

CPU 18, at first, sets i=2 and j=2 (Steps S41 and S42). Then, the cell at row 2, column 2 is defined as the cell of interest (Step S43). This is shown as the hatched cell in Figure 13. CPU 18 checks whether all the 5x5 cells whose center is the cell of interest are in "inactive" state or not in configuration pattern A⁰ (the binarized original image) (Step S44). That is, whether all of a⁰(0, 0), a⁰(1, 0), a⁰(2, 0), a⁰(3, 0), a⁰(4, 0), a⁰(0, 1), a⁰¹I, 1) ... a⁰(2, 4), a⁰(3, 4), a⁰(4, 4) are in "inactive" states or not. Note that the process was begun from i=2 and j=2 because the process cannot be performed with the coordinates i < 2 or j < 2 in Step S44.

When all of the states of a⁰(0, 0), a⁰(1, 0), a⁰(2, 0), a⁰(3, 0), a⁰(4, 0), a⁰(0, 1), a⁰(1, 1) ... a⁰(2, 4), a⁰(3, 4), a⁰(4, 4) in configuration pattern A⁰ are "inactive", processing for the cell of interest is not performed, and it proceeds to the next cell. That is, if a cell of the binarized original image satisfies such conditions, the processes of Step S45 and S46 are not performed in each following time point.

On the other hand, if any cell is in the "active" state, the procedure to determine the next state a¹(2, 2) of the cell of interest is performed (Step S45).

CPU 18 determines the next state a¹ (2, 2) according to Table 1.

**[Table 1]**

| Determine the next state | | |
|---|---|---|
| Number of "inhibitions" in b^{t} from surrounding cells | Present state a^{t} of the cell of interest | Next state a^{t+1} of the cell of interest to be determined |
| Greater than or equal to threshold S | Inactive | Active |
| | Active | Inactive |
| Smaller than threshold S | Inactive | Inactive |
| | Active | Active |

Input from the surrounding cells is shown in Figure 2B. The input form the surrounding cells can be one of two values. One is the "inhibited" state signal represented by -1, the other is the "excited" state signal represented by 1. Note that the inputs from the surrounding cells at time t=0 are all set to the "inhibited" state.

It is clear that, as shown in Table 1, when the number of "inhibited" state signals in the signals from the surrounding cells, b⁰(2, 2)(0, -1), b⁰(2, 2)(1, -1), b⁰(2, 2)(1, 0), b°⁰2, 2)(1, 1), b⁰(2, 2)(0, 1), b⁰(2, 2)(-1, 1), b⁰(2, 2)(-1, 0) and b⁰(2, 2)(-1, 1) is greater than or equal to threshold S (e.g. 4), the state of the cell of interest a⁰(2, 2) is changed and becomes the next state a¹(2, 2). That is, the "inactive" state is changed to the "active" state, and the "active" state is changed to the "inactive" state. When the number of "Inhibition" state signals is less than threshold S from the input states from the surrounding cells, the state of the cell of interest a⁰(2, 2) maintains for the next state a¹(2, 2).

CPU 18 records the next state a¹(2, 2) of the determined pixel of interest in the configuration buffer for the time t=1.

CPU 18 determines the content which is output to time t=1 concerning eight surrounding cells, i.e., the cell at the top, the cell at the bottom, the cell at the left, the cell at the right, the cell at the top right, the cell at the top left, the cell at the bottom right and the cell at the bottom left (Step S46). CPU 18 performs this procedure according to Table 2.

**[Table 2]**

| Determine next output to the surrounding cells | | |
|---|---|---|
| b^{t} from the surrounding cells | Present state at of the cell of interest | Next output c^{t+1} to the surrounding cell |
| Inhibition | Active | Excitation |
| | Inactive | Inhibition |
| Excitation | Active | Inhibition |
| | Inactive | Excitation |

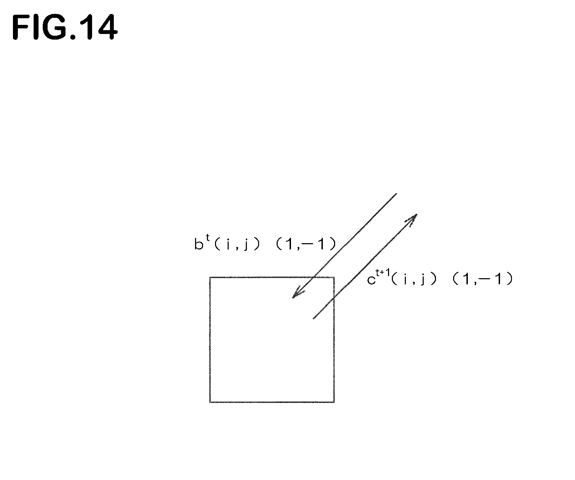

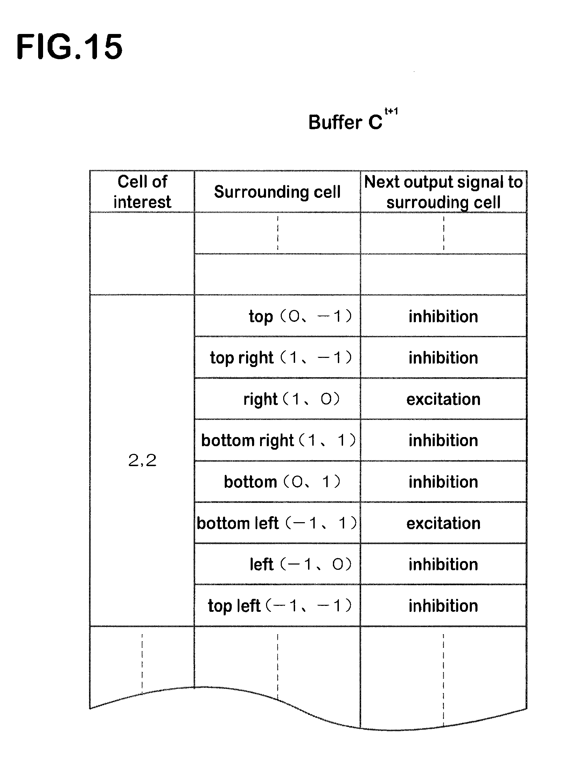

For example, as shown in Figure 14, next output c^{t+1}(i, j)(1, -1) from the cell of interest to the surrounding cell adjacent to the right top of the cell of interest at the position row i, column j is determined by using the present input state b^{t}(i, j)(1, -1) from the cell at the top right and the present state of the cell of interest a^{t}(i,j). Outputs of other cells are determined with the same criteria. CPU 18 records the next outputs determined by above mentioned process in buffer C^{t+1} (Figure 15).

Next, CPU18 increments j by 1, and using the cell at i=2, j=3 as the cell of interest (Step S43), it carries out Steps S44 and following. From this, the next state a¹(2,3) of the cell at i=2, j=3 is determined, and is recorded in the configuration buffer of t=1. It is also recorded in the buffer of Figure 15, where the next output for the surrounding cells is calculated.

Repeating the above, when repetition reaches the rightmost cell (precisely, the third cell from the rightmost), CPU18 increments i by 1. From this, the next line's cell becomes the cell of interest. Following this, by repeating this process, the above-mentioned process concerning all of the cells of the configuration pattern for t=0 is completed.

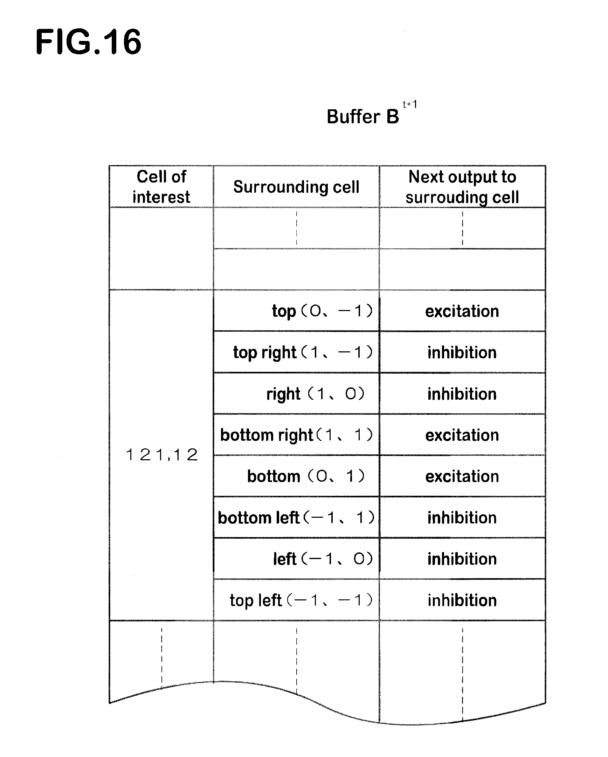

CPU 18 generates input buffer B^{t+1} as shown in Figure 16 (Step S47) based on the contents of output buffer C^{t+1}. Furthermore, input buffer B^{t+1} has centered, generated and corrected the cells that receive input for the contents of output buffer C^{t+1}, in which output cells have been centered and described.

In the above manner, configuration pattern A¹ is formed. Configuration pattern A⁰ (the binarized original picture) is shown in the upper section of Figure 3a, and configuration pattern A¹ is shown in the upper section of Figure 3c.

Next, CPU 18 generates a primary flag pattern based on the configuration patterns that have accumulated as time elapses (Figure 11a Step S5). The primary flag pattern, as explained in Figure 4, is formed provided that 3 or more of the conditions in Figures 4A ∼ 4E are fulfilled. Thus, if at least three configuration patterns have not accumulated, the primary flag will not be generated. Primary flags are not generated in the middle and lower sections of Figure 3a for this reason.

Next, CPU 18 generates a secondary flag pattern based on the primary flag patterns that have accumulated as time elapses (Figure 11a Step S6). The secondary flag pattern, as explained in Figure 6, will be formed provided that 3 or more of the conditions in Figures 6A ∼ 6E are fulfilled. Thus, if at least three primary flag patterns have not accumulated, the secondary flag will not be formed. Secondary flags are not generated in the upper and middle sections of Figure 3b for this reason.

Next, CPU 18 detects line segments based on the secondary flag pattern (Figure 11a Step S7). In a stage where secondary flags are not generated, line segments will not be detected. Line segment markers have not been generated in the lower section of Figure 3b for this reason.

In the above manner, when processing concerning time t=0 is finished, CPU 18 passes through Step S8 (this process will be explained later), proceeds to Step S9, and adds 1 to t. That is, it makes t=1.

CPU 18 again carries out Step S4 and the following processes with t=1. When generating configuration patterns, the next state a² of each cell of interest is determined based on table 1. Then, the next state c² output from each cell of interest to the surrounding cells is determined based on table 2. At this time, based on buffer B¹ generated in Step S47 of Figure 12, CPU 18 references input b¹ from the surrounding cells.

Configuration pattern A² at time t=2 is shown in the upper section of Figure 3e.

When the processes of Figures 11a and 11b are repeated, for each time that t has increased, configurations patterns A⁰A¹A² are generated and recorded in a buffer in succession.

### (2) Generation of primary flag pattern PF

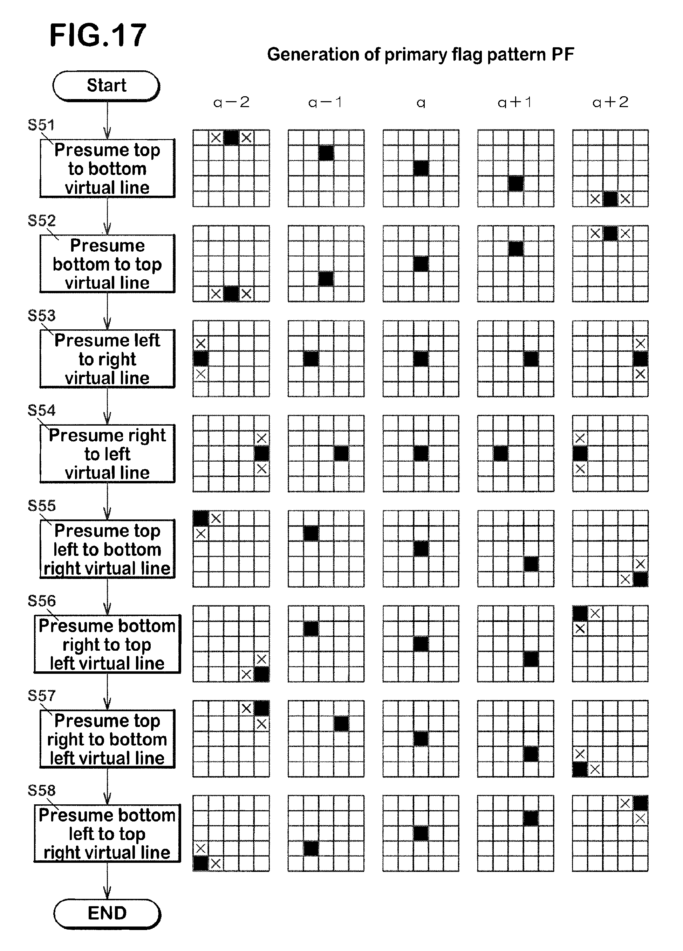

While CPU 18 generates and records configuration patterns A⁰A¹A², ..., it carries out the generation of the primary flag pattern (Figure 11a Step 5). The primary flag pattern generation process is shown in Figure 17.

CPU 18 determines standard time point q for detecting primary flags. In the embodiment diagram, a time point where the present t has been decremented by 2 is used as standard time point q. First, CPU 18 determines whether or not the cell of interest at standard time point q can be presumed to exist as a part of a downward facing virtual line (Step S51).

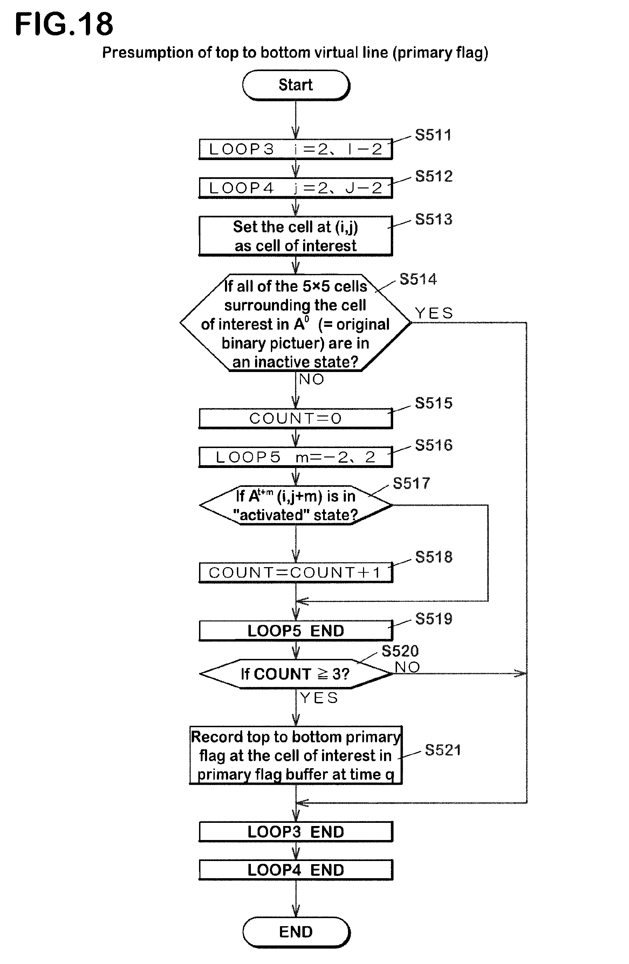

As shown in Figure 17 Step S51, CPU 18 carries out a determination concerning configuration pattern A^{q-2}A^{q-1}A^{q}A^{q+1}A^{q+2} from time point q-2, which is 2 time points before standard time point q, to time point q+2, which is 2 time points after standard time point q. The flowchart of the presumption-process of downward virtual lines is shown in Figure 18.

First, CPU 18 sets the cell at position i=2, j=2 in configuration pattern A^{q} of standard time point q as the cell of interest (Step S513). Next, it determines whether a 5 x 5 area of cells centering the cell of interest in the binarized original picture are all "inactive" (Step S514). If they are all inactive, as there is little possibility that processing will yield meaningful results, it does not carry out the process concerning this cell of interest (identical with Figure 12 Step S44).

If any cells are "active", even one, CPU 18 changes m one by one from -2 to 2 and carries out Steps S517 and S518. When m=-2, concerning configuration pattern A^{q-2} (that is, the pattern two points before standard time point q) in Step S517, it determines whether the cell located at column i, row j-2 (that is, the cell turned to black in q-2 of Figure 17 Step S51) is "active" or not. If it is "active", 1 is added to COUNT (Step S518). For the above process, after changing m, concerning configuration pattern A^{q-1} (that is, the pattern one step before standard time point q), it is determined whether the cell located at column i, row j-1 (that is, the cell turned to black in q-1 of Figure 17 Step S51) is "active" or not, ..., and concerning configuration pattern A^{q+2} (that is, the pattern 2 steps after standard time point q), it is determined whether the cell located at column i, row j+2 (that is, the cell turned to black in q+2 of Figure 17 Step S51) is "active" or not, then the number determined as "active" is recorded in COUNT.

If the number of COUNT is greater than or equal to the prescribed threshold value (here being 3), CPU 18 records a top-to-bottom primary flag pf in the cell of interest of the primary flag buffer of time point q (Step S521). In this way, the direction of the virtual line of primary flag pf is also recorded. Primary flag pf is, for example, recorded in primary flag buffer PF^{q} as in Figure 5 (though in Figure 5, the down-right primary flag is shown).

In the above manner, when the process concerning one cell of interest is completed, the same process is carried out using the next cell as the cell of interest. Then, this is repeated until the processing concerning all of the cells is done, and the primary flag detection of the top-to-bottom virtual line is completed.

In Figure 17 Steps S52-S58, the processing means is identical with Step S51; only the direction of the virtual line differs.

In the above manner, primary flag pattern PF^{q} is generated. As processes of Figure 11a Steps S4-S9 are repeated and t is incremented, the time-sequential flag patterns PF^{q} PF^{q+1} PF^{q+2}... are generated and recorded. One series of primary flag patterns is shown in the middle and lower sections of Figure 3e and Figures 3g ∼ 3u.

Still, in the above, it is assumed that for one time point, there will be one cell that must be detected as "active". If for one time point more than one cell is set up as a detection object, if any cells are "active", processing may proceed in a manner that fulfills these conditions. For example, in q-2 and q+2, the cells in Figure 17 that show an X can also be used as detection object cells. In this way, it is possible to detect lines that have a slight difference in slope.

### (3) Generation of secondary flag pattern SF

In the manner mentioned above, while CPU 18 generates and records primary flag patterns PF² PF³ PF⁴... it carries out the generation of secondary flag pattern SF (Figure 11a Step S6).

CPU 18 determines standard time rq for the purpose of secondary flag detection. In this embodiment, a time point where the present time t has been decreased by 4 is used as standard time point r. CPU 18 first determines whether or not the cell of interest at standard time point r can be presumed to be a part of a top-to-bottom virtual line (Step S61). Likewise, it determines whether or not it can be presumed to be part of virtual lines facing in other directions (Steps S62-68).

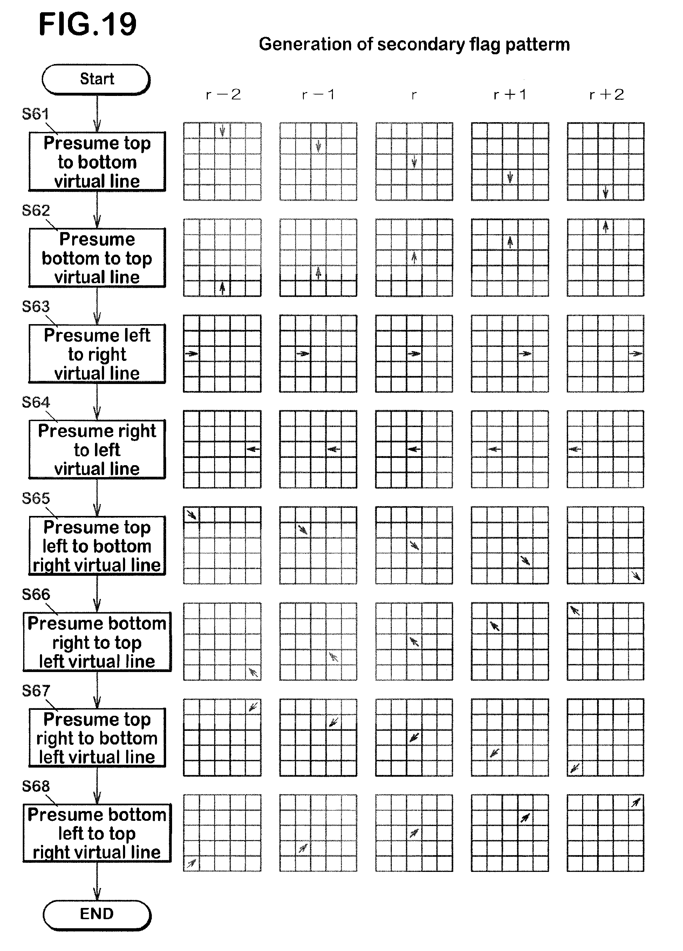

A flowchart of the generation process of secondary flag pattern SF is shown in Figure 19. From Figure 19, clearly, the detection method of secondary flag pattern sf is the same as the detection method of primary flag pattern pf. However, in the detection of secondary flag pattern sf, it differs in the point that it determines whether or not the direction of the primary flag and the direction of the virtual line are in accord.

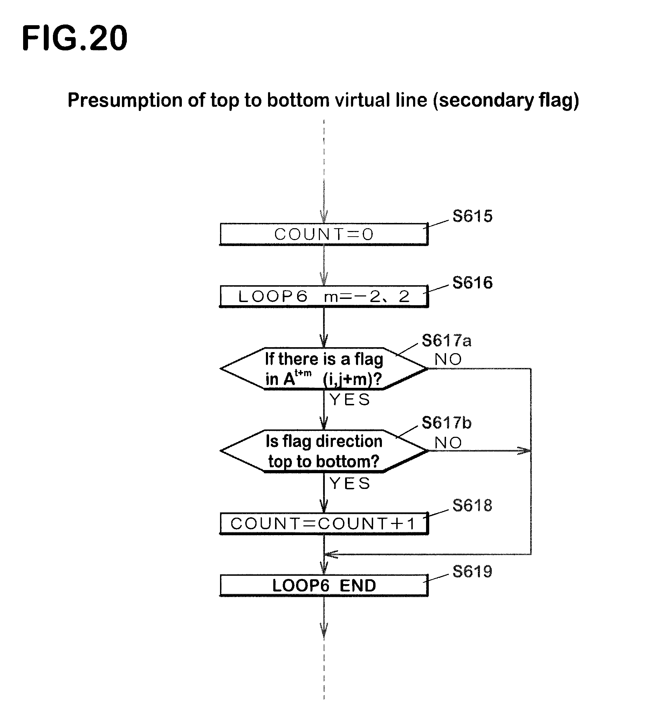

In Figure 20, in the flowchart for the presumption process for downward virtual lines, a point of difference with primary flag detection (Figure 18) is shown. In Step S617a, it is determined whether or not a primary flag is present in the cell at column i, row j+m of PF^{r-m}. If a primary flag is present, it is next determined whether or not the flag's direction and the imaginary line's direction (here top-to-bottom) are in accord (Step S617b). If they are in accord, since the conditions are fulfilled, COUNT is increased by 1 (Step S618). Thus, in the detection of secondary flag sf, even if a flag is present in the detection object cell, if its direction is not in accord with the direction of the virtual line, there will be no secondary flag present (Refer to the example of Figure 7).

When COUNT exceeds the threshold value (here 3), CPU 18 records a top-to-bottom secondary flag in the cell of interest of the secondary flag buffer (this corresponds to Figure 18 Step S521). Still, though a primary flag buffer has been prepared for each respective standard time point in the time sequence, the secondary flags generated in each standard time point can be recorded sequentially in a single secondary flag buffer.

In the above, an explanation has been given concerning the detection of top-to-bottom secondary flags. The detection process concerning secondary flags facing in other directions is identical.

Changes in secondary flag pattern SF recorded in the secondary flag buffer are shown in the upper and middle sections of Figure 3j and Figures 3i ∼3v. Furthermore, for convenience's sake, only secondary flags that were newly generated at the time in question are shown in these figures.

### (4) Line segment marker pattern generation

As mentioned above, while CPU 18 generates secondary flag sf as time elapses, it continues to modify secondary flag pattern SF, and carries out the line segment marker pattern detection process (Figure 11a Step S7).

CPU 18, concerning each pixel of recorded secondary flag pattern SF, searches to see if a secondary flag facing in the opposite direction is present. For example, in Figure 9A, there are 5 cells where the "bottom right to top left" and "top left to bottom right" secondary flags are recorded. When CPU 18 detects this, it records line segment marker rl concerning the cell in question of the line segment marker pattern buffer (see Figure 9B). Still, in this embodiment, line segment marker rl will be recorded containing the line segment's direction as well. In this way, it can be made certain whether or not a detected line segment exists as part of a line of a certain direction.

In the above manner, as time elapses, line segment markers are recorded in the line segment marker pattern buffer, and the line segment pattern is generated.

### (5) Stopping the process

While repeating the above process, CPU 18 brings the process to completion depending on its own judgment. This process belongs to Step S8. In this embodiment, from time t=0 t is increased, and the judgment in Step S8 is carried out according to the time points following that in which the line segment marker was first recorded.

In Step S8, the number of newly generated line segment markers in the current time point is calculated. If this number is smaller than the prescribed ratio (for example, 1%, etc.) concerning the number of active cells contained in configuration patter A⁰ (that is, the number of black pixels in the binarized original picture), the process is brought to completion. This is because when there are few newly generated line segment markers, it can be assumed that for the most part, detection of any necessary lines has been completed.

Furthermore, even in the situation that the above-mentioned conditions are not fulfilled, processing is brought to completion in the conditions where the previously established number of times of t have been carried out.

### (6) Noise elimination

When the conditions to stop processing are fulfilled, CPU 18 carries out the noise elimination process for recorded line segment marker pattern RL (Step S10). In this embodiment, concerning each cell where a line segment marker rl of line segment marker pattern RL has been recorded, it is determined whether or not the cells in the corresponding configuration pattern A⁰ are "active". If "active", the line segment marker rl of the cell in line segment marker pattern RL is left as-is. If a cell in corresponding configuration pattern A⁰ is "inactive", the line segment marker rl in the cell in question in line segment marker pattern RL is deleted. In this case, the reason is that since the pixel in the binarized original picture that corresponds to the line segment marker in question is not black, there is a high possibility that it is noise.

### (7) Displaying results

While recording the noise-removed line segment marker pattern to Hard Disk 20, CPU 18 creates a display on Display 14 (Step S11). At this time, CPU 18, for example, may create a display and modify colors according to the directions of the line segment markers.

### 4. Other embodiments

(1) In the above embodiments, line segment marker detection is carried out based on the secondary flags. It is done in this manner for the purpose of suppressing noise generation. However, depending on the type of picture (pictures with many vertical and horizontal lines, etc.), without carrying out secondary flag detection, line segment marker detection may be carried out based on the primary flags. Also, tertiary flags (flags detected based on secondary flags), etc. may be prepared and line segment marker detection carried out based on these.

(2) In the above embodiments, 5 time points' patterns are used for the purpose of detecting primary flags and secondary flags. However, detection may also be carried out based on 4 or less, or 6 or more patterns. Also, depending on the primary flags and secondary flags, the number of patterns used for detection may change. For example, primary flags may be detected using 5 time points' configuration patterns, and secondary flags may be detected using 3 time points' primary flag patterns. Depending on the type of picture, working in this way, processing can be sped up while suppressing noise.

(3) In the above embodiments, in each processing step, it is determined whether or not the cells surrounding the pixel of interest in the binarized original picture are all "inactive" or not, and processing is omitted (Step S44 of Figure 12, etc.). However, before all processing, cells that fulfill the above mentioned conditions may be removed from the cell of interest.

(4) In the above embodiments, as shown in Figure 17, there is one detection-object cell for each of 5 respective time points. However, it can also be done in a manner where multiple detection-object cells are set up, still with 5 time points, and in each time point, if all of the detection-object cells are not "active", conditions are not satisfied (or, it may also be set so that if the prescribed number or greater of detection object cells are not "active", conditions are not satisfied). Thus, if the number of time points that satisfies the conditions meets or exceeds the threshold value, a primary flag will be set in multiple cells (a flag is set in the position of a detection object cell in the standard time point). In this way, thick lines can be quickly detected. The same is true for secondary flags.

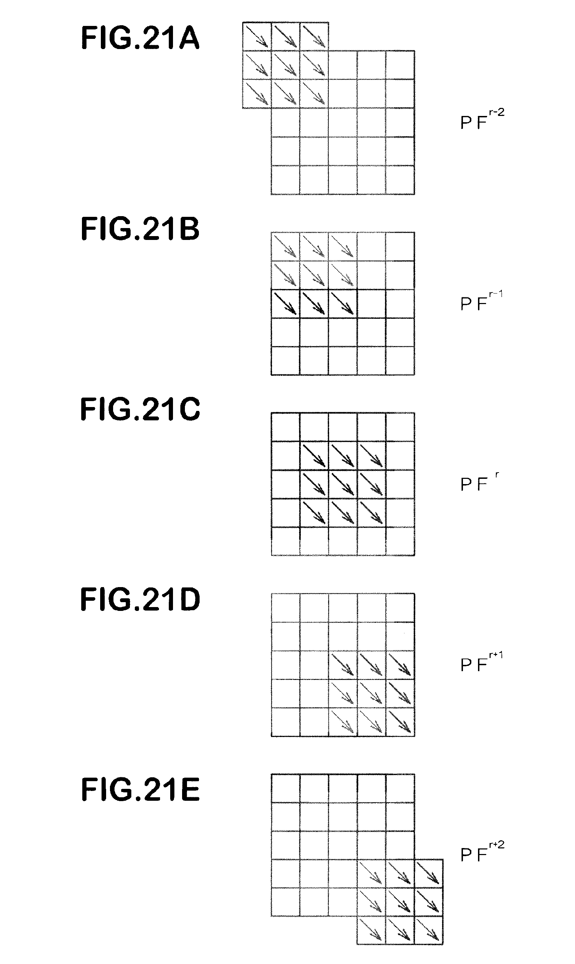

(5) In the above embodiments, the determination of secondary flags is carried out as shown in Figure 6. However, as shown in Figure 21, in the number of cells of the surrounding area containing object cells (here 9), if there are any primary flags where the directions match, conditions may be determined to be satisfied. Thus, if the time taken to satisfy the conditions meets or exceeds the threshold value, secondary flags will be set.

Especially, since primary flags shown in the early period are of high importance in line segment detection, it is desirable to carry out line segment detection in the manner mentioned above, if at all possible. For example, until t's prescribed time (for example, t=10), secondary flags may be detected via the method of Figure 21, then on and after that secondary flags may be detected via the method of Figure 6. (6) In the above embodiment, the ratio of the number of black pixels in the binarized original picture to the number of newly detected line segment markers is used as the stop condition of Step S8. However, the slope of change of the number of newly detected line segment markers may also be used.

(7) In the above embodiments, line segment markers are being recorded concerning cells where secondary flags of opposite directions have been set. However, line segment markers may also be set concerning cells where a secondary flag of one direction has been set.

(8) In the above embodiments, line segment detection has been carried out concerning a picture in two-dimensional space; however, line segment detection may be carried out in the same way concerning multidimensional space. For example, in three-dimensional space there come to be 26 cells surrounding the cell of interest; the directions of virtual lines increase to 24, but the basic processing contents are still the same.

(9) In the above embodiments, line segment detection was carried out using the original picture's black parts as active state and white parts as inactive state, but the original picture's white parts may also be used as active state and black parts as inactive state.

(10) In the above embodiments, in each cell of the line segment marker pattern buffer, detected line segment markers are being recorded in succession. Thus, the situation also arises that in one cell, line segment markers of multiple directions are recorded. However, it may also be arranged so that for a cell where a line segment marker has already been recorded, line segment markers beyond that are not recorded.

(11) In the above embodiments, it is set up so that the state of the cell of interest is determined by receiving input from 8 surrounding cells. However, the state of the cell of interest may also be determined by looking only to a specific surrounding cell, or the state of the cell of interest may also be determined by looking to the input from an arbitrary number of cells.

(12) In the above embodiments, output concerning the surrounding cells in question is being determined looking at one of the states of the surrounding cells' output signals. However, another surrounding cell's state may also be considered.

(13) In the above embodiments, the next state of the cell of interest is being calculated based on the present state of the cell of interest and the state of the input received from the surrounding cells, and the input from the surrounding cells is determined based on the present state output by the cell of interest concerning the surrounding cell in question and the present state of the surrounding cell in question.

However, the input from the surrounding cells may be the present state of the surrounding cell as is. That is, a conventional cellular automaton may be used.

(14) In the above embodiments, Figure 1's function has been realized using software, but part or all of it may also be realized using hardware.

### 5. Example

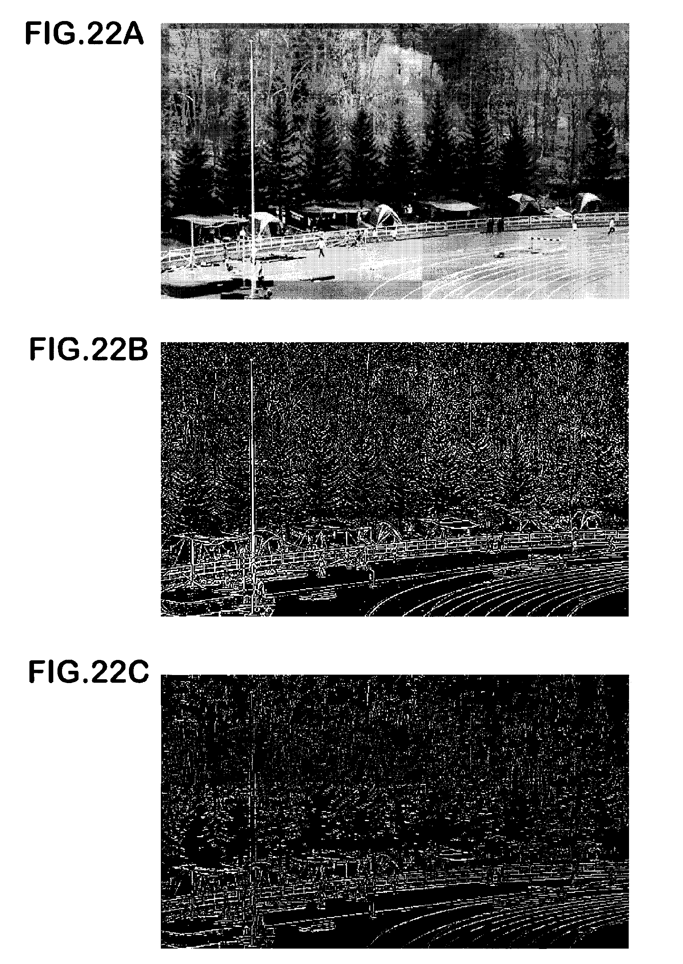

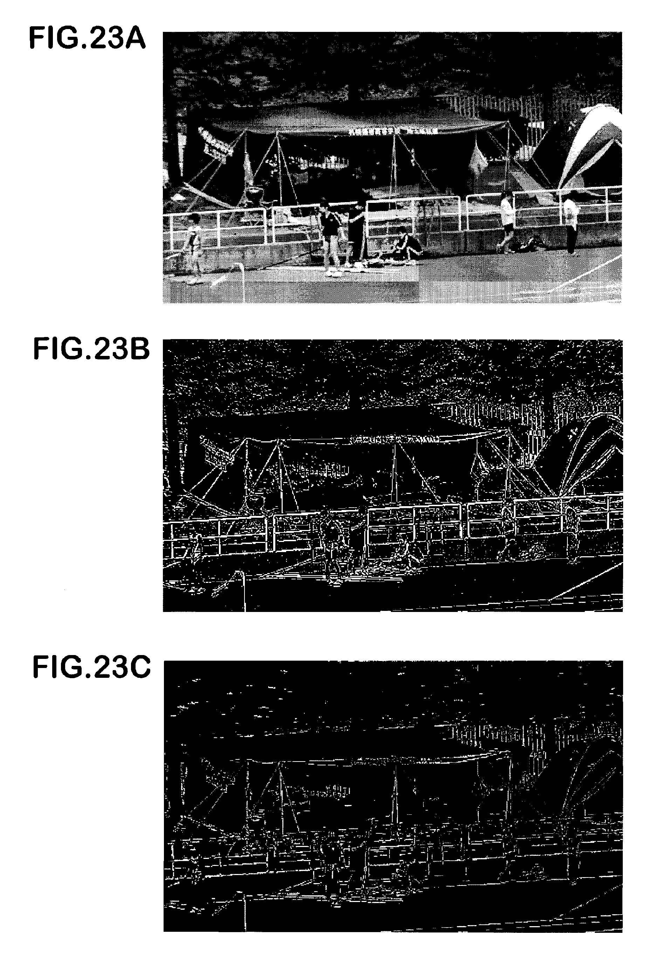

An example of the process for extracting line segments from pictures being carried out using the line extraction program of the above mentioned embodiment is shown in Figures 22 ∼ 25. Figure 22A shows the original picture, Figure 22B the binarized original picture, and Figure 22C line segment extraction results. The same is also true for that in Figures 23, 24, and 25. A personal computer using a Centrino™ Duo (clock frequency 1.8GHz) was used as the CPU. The processing of the line segment extraction program was carried out following that in the above embodiments. However, in the secondary flag detection process, until t=10, processing was carried out in the detection method shown in Figure 21, and t=11 and following were carried out in the detection method shown in Figure 6.

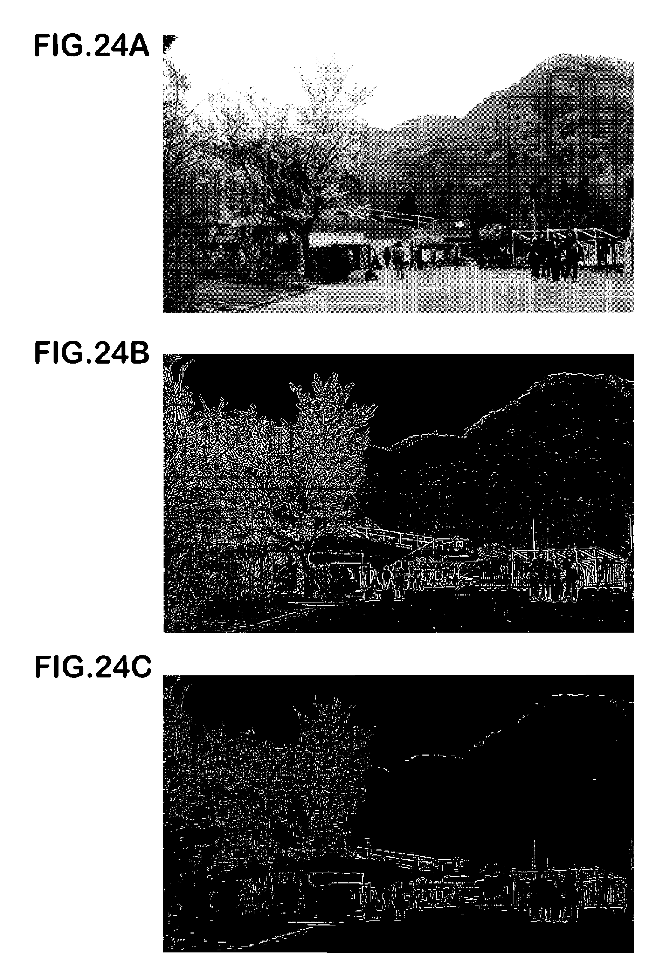

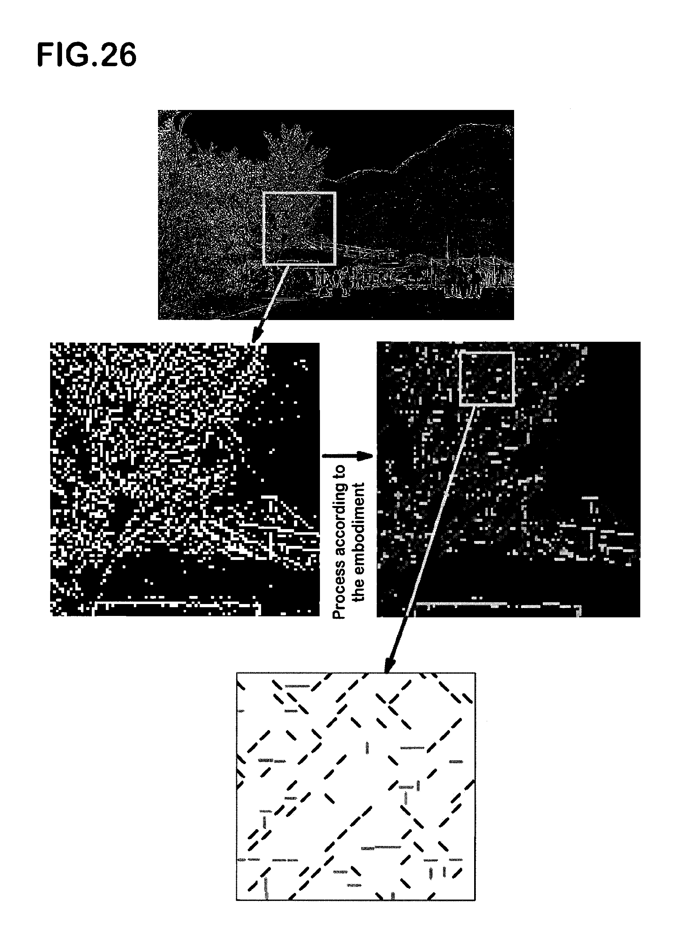

In the upper section of Figure 26, Figure 24B's binarized picture is displayed again. The central left section shows a magnified section of this binarized picture. The central right section shows the results of line segment detection carried out following the above embodiments with line segment markers corresponding to the aforementioned magnified section. The lower section shows the central right section's line segment markers, magnified. From the Figure of the lower section, line segments' presence or absence is shown and their directions are detected.

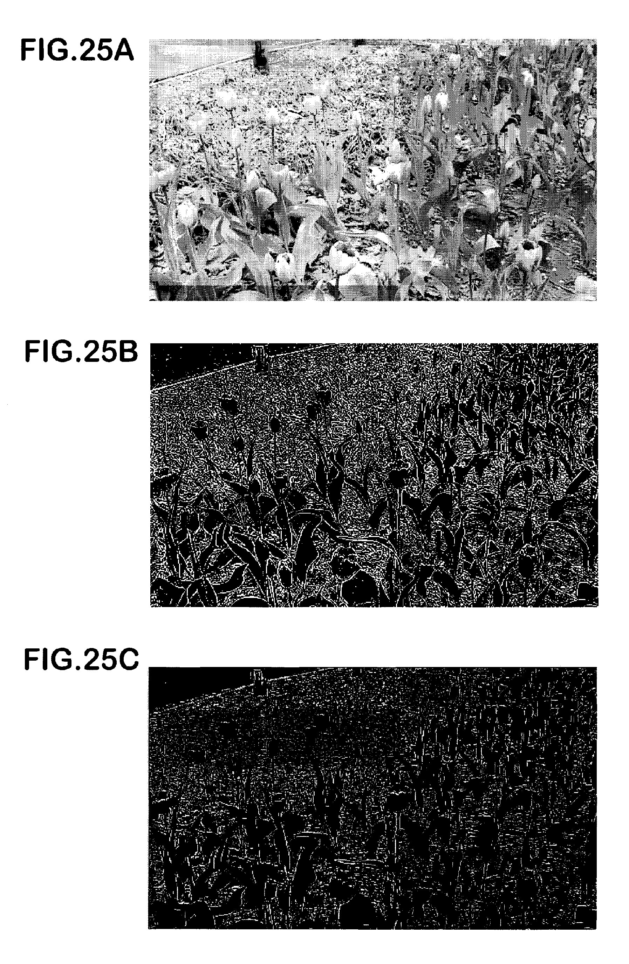

It should be understood from Figure 25 that even extremely thin lines (lines with high spatial frequency) can be properly detected.

## Claims

1. A device for extracting line segments from a picture having a plurality of pixels disposed in multidimensional, the device comprising:
pattern generating means for calculating next state to be output from cell of interest to surrounding cells based on the states input from the surrounding cells and the present state of the cell of interest, said cell of interest being selected in turn from cells corresponding to the pixels of picture each of which having active state or inactive state according to value of corresponding pixel of picture and for calculating next state of the cell of interest based on present state of the cell of interest and states input from the surrounding cells to the cell of interest so that a configuration pattern indicating states of cells in multidimensional is generated and recorded, wherein the pattern generating means repeats the process of the generating and recording the configuration pattern;
primary detecting means for detecting movement with time of active cell along with directional virtual line based on the configuration patterns at preceding and following timings (q-k, ...., q-1, t, q+1, ..., q+1) of the reference time (q) recorded by the pattern generating means so that primary flag pattern indicating positions of directional primary flags in multidimensional is generated and recorded by recording the directional primary flags which shows that the cells is part of the directional virtual line of given direction with respect to target cells which is cell on the directional virtual line at the reference time (q), wherein the primary detecting means repeats the process with varying the reference time (q) in order; and
line detecting means for detecting cell to which the directional primary flag of one direction and another directional primary flag of opposite direction to the one direction are recorded based on the primary flag pattern recorded by the primary detecting means so that mark indicating part of the line is recorded to said detected cell.

2. A device for extracting line segments from a picture having a plurality of pixels disposed in multidimensional, the device comprising:
pattern generating means for calculating next state to be output from cell of interest to surrounding cells based on the states input from the surrounding cells and the present state of the cell of interest, said cell of interest being selected in turn from cells corresponding to the pixels of picture each of which having active state or inactive state according to value of corresponding pixel of picture and for calculating next state of the cell of interest based on present state of the cell of interest and states input from the surrounding cells to the cell of interest so that a configuration pattern indicating states of cells in multidimensional is generated and recorded, wherein the pattern generating means repeats the process of the generating and recording the configuration pattern;
primary detecting means for detecting movement with time of active cell along with directional virtual line based on the configuration patterns at preceding and following timings (q-k, ...., q-1, q, q+1, ..., q+1) of the reference time (q) recorded by the pattern generating means so that primary flag pattern indicating positions of directional primary flags in multidimensional is generated and recorded by recording the directional primary flags which shows that the cells is part of the directional virtual line of given direction with respect to target cells which is cell on the directional virtual line at the reference time (q), wherein the primary detecting means repeats the process with varying the reference time (q) in order;
secondary detecting means for detecting movement with time of the primary flag along with the directional virtual line based on the primary flag patterns at preceding and following timings (r-p, ...., r-1, r, r+1, ..., r+u) of the reference time (r) recorded by the primary detecting means, said secondary detecting means detecting said movement of the primary flag, direction of which is same with the given direction of the directional virtual line, so that secondary flag pattern indicating positions of directional secondary flags in multidimensional is generated and recorded by recording the directional secondary flags which shows that the cells is part of the directional virtual line of given direction with respect to target cells which is cell on the directional virtual line at the reference time (r), wherein the secondary detecting means repeats the process with varying the reference time (r) in order; and
line detecting means for detecting cell to which the directional secondary flag of one direction and another directional secondary flag of opposite direction to the one direction are recorded based on the secondary flag pattern recorded by the secondary detecting means so that mark indicating part of the line is recorded to said detected cell.

3. A program for extracting line segments from a picture having a plurality of pixels disposed in multidimensional, said program making computer as following means:
pattern generating means for calculating next state to be output from cell of interest to surrounding cells based on the states input from the surrounding cells and the present state of the cell of interest, said cell of interest being selected in turn from cells corresponding to the pixels of picture each of which having active state or inactive state according to value of corresponding pixel of picture and for calculating next state of the cell of interest based on present state of the cell of interest and states input from the surrounding cells to the cell of interest so that a configuration pattern indicating states of cells in multidimensional is generated and recorded, wherein the pattern generating means repeats the process of the generating and recording the configuration pattern;
primary detecting means for detecting movement with time of active cell along with directional virtual line based on the configuration patterns at preceding and following timings (q-k, ...., q-1, q, q+1, ..., q+1) of the reference time (q) recorded by the pattern generating means so that primary flag pattern indicating positions of directional primary flags in multidimensional is generated and recorded by recording the directional primary flags which shows that the cells is part of the directional virtual line of given direction with respect to target cells which is cell on the directional virtual line at the reference time (q), wherein the primary detecting means repeats the process with varying the reference time (q) in order; and
line detecting means for detecting cell to which the directional primary flag of one direction and another directional primary flag of opposite direction to the one direction are recorded based on the primary flag pattern recorded by the primary detecting means so that mark indicating part of the line is recorded to said detected cell.

4. The program for extracting line segments in accordance with Claim 3,
wherein, at least one of said pattern generating means and said primary detecting means does not carry out the process when all of the cells of the picture at predetermined area around the cell of interest or the target cell are inactive states.

5. The program for extracting line segments in accordance with Claim 3 or 4,
wherein the process by the pattern generating means, the primary detecting means and line detecting means is repeated in turn, and
further comprising means for halting the process when the relation between number of black cells of the picture and number of the cells which is detected as the part of the line at this time satisfies predetermined condition.

6. A program for extracting line segments from a picture having a plurality of pixels disposed in multidimensional, said program making computer as following means:
pattern generating means for calculating next state to be output from cell of interest to surrounding cells based on the states input from the surrounding cells and the present state of the cell of interest, said cell of interest being selected in turn from cells corresponding to the pixels of picture each of which having active state or inactive state according to value of corresponding pixel of picture and for calculating next state of the cell of interest based on present state of the cell of interest and states input from the surrounding cells to the cell of interest so that a configuration pattern indicating states of cells in multidimensional is generated and recorded, wherein the pattern generating means repeats the process of the generating and recording the configuration pattern;
primary detecting means for detecting movement with time of active cell along with directional virtual line based on the configuration patterns at preceding and following timings (q-k, ...., q-1, q, q+1, ..., q+1) of the reference time (q) recorded by the pattern generating means so that primary flag pattern indicating positions of directional primary flags in multidimensional is generated and recorded by recording the directional primary flags which shows that the cells is part of the directional virtual line of given direction with respect to target cells which is cell on the directional virtual line at the reference time (q), wherein the primary detecting means repeats the process with varying the reference time (q) in order;
secondary detecting means for detecting movement with time of the primary flag along with the directional virtual line based on the primary flag patterns at preceding and following timings (r-p, ...., r-1, r, r+1, ..., r+u) of the reference time (r) recorded by the primary detecting means, said secondary detecting means detecting said movement of the primary flag, direction of which is same with the given direction of the directional virtual line, so that secondary flag pattern indicating positions of directional secondary flags in multidimensional is generated and recorded by recording the directional secondary flags which shows that the cells is part of the directional virtual line of given direction with respect to target cells which is cell on the directional virtual line at the reference time (r), wherein the secondary detecting means repeats the process with varying the reference time (r) in order; and
line detecting means for detecting cell to which the directional secondary flag of one direction and another directional secondary flag of opposite direction to the one direction are recorded based on the secondary flag pattern recorded by the secondary detecting means so that mark indicating part of the line is recorded to said detected cell.

7. The program for extracting line segments in accordance with Claim 6,
wherein, at least one of said pattern generating means, said primary detecting means and said secondary detecting means does not carry out the process when all of the cells of the picture at predetermined area around the cell of interest or the target cell are inactive states.

8. The program for extracting line segments in accordance with Claim 6 or 7,
wherein the process by the pattern generating means, the primary detecting means, the secondary detecting means and line detecting means is repeated in turn, and
further comprising means for halting the process when the relation between number of black cells of the picture and number of the cells which is detected as the part of the line at this time satisfies predetermined condition.

9. The program for extracting line segments in accordance with one of Claims 3 to 8, further comprising:
noise cancelling means for eliminating the detected cell from the part of the line when the pixel of the picture corresponding to the detected cell is not black.

10. The program for extracting line segments in accordance with one of Claims 3 to 9, wherein said line detecting means records the direction of the detected line.

11. A device for extracting line segments from a picture having a plurality of pixels disposed in multidimensional, the device comprising:
pattern generating means for calculating next state to be output from cell of interest to surrounding cells based on the states input from the surrounding cells and the present state of the cell of interest, said cell of interest being selected in turn from cells corresponding to the pixels of picture each of which having active state or inactive state according to value of corresponding pixel of picture and for calculating next state of the cell of interest based on present state of the cell of interest and states input from the surrounding cells to the cell of interest so that a configuration pattern indicating states of cells in multidimensional is generated and recorded, wherein the pattern generating means repeats the process of the generating and recording the configuration pattern; and
line judging means for detecting movement of active cell or inactive cell based on series of the configuration patterns recorded by the pattern generating means so that the line is judged based on the movement of cell.

12. A program for extracting line segments from a picture having a plurality of pixels disposed in multidimensional, said program making computer as following means:
pattern generating means for calculating next state to be output from cell of interest to surrounding cells based on the states input from the surrounding cells and the present state of the cell of interest, said cell of interest being selected in turn from cells corresponding to the pixels of picture each of which having active state or inactive state according to value of corresponding pixel of picture and for calculating next state of the cell of interest based on present state of the cell of interest and states input from the surrounding cells to the cell of interest so that a configuration pattern indicating states of cells in multidimensional is generated and recorded, wherein the pattern generating means repeats the process of the generating and recording the configuration pattern; and
line judging means for detecting movement of active cell or inactive cell based on series of the configuration patterns recorded by the pattern generating means so that the line is judged based on the movement of cell.

13. A device for generating configuration pattern to be used for extracting line segments from a picture having a plurality of pixels disposed in multidimensional, the device comprising:
pattern generating means for calculating next state of a cell of interest based on present state of the cell of interest and states input from the surrounding cells to the cell of interest, said cell of interest being selected in turn from cells corresponding to the pixels of picture each of which having active state or inactive state according to value of corresponding pixel of picture so that a configuration pattern indicating states of cells in multidimensional is generated and recorded, wherein the pattern generating means repeats the process of the generating and recording the configuration pattern;
wherein said pattern generating means generates the states input from the surrounding cells to the cell of interest based on the states input from the surrounding cells and the present state of the cell of interest.

14. A program for generating configuration pattern to be used for extracting line segments from a picture having a plurality of pixels disposed in multidimensional, said program making computer as following means:
pattern generating means for calculating next state of a cell of interest based on present state of the cell of interest and states input from the surrounding cells to the cell of interest, said cell of interest being selected in turn from cells corresponding to the pixels of picture each of which having active state or inactive state according to value of corresponding pixel of picture so that a configuration pattern indicating states of cells in multidimensional is generated and recorded, wherein the pattern generating means repeats the process of the generating and recording the configuration pattern;
wherein said pattern generating means generates the states input from the surrounding cells to the cell of interest based on the states input from the surrounding cells and the present state of the cell of interest.
